(19)

**Europäisches Patentamt**
**European Patent Office**
**Office européen des brevets**

(11) **EP 4 250 658 A2**

(12) **EUROPEAN PATENT APPLICATION**

(43) Date of publication:
**27.09.2023 Bulletin 2023/39**

(51) International Patent Classification (IPC):
***H04L 27/26*** *(2006.01)*

(21) Application number: **23179063.5**

(22) Date of filing: **23.03.2018**

(52) Cooperative Patent Classification (CPC):
**H04B 7/0617; H04L 27/2613; H04W 68/025**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2017 US 201762475744 P**

(62) Document number(s) of the earlier application(s) in accordance with Art. 76 EPC:
**18717478.4 / 3 602 828**

(71) Applicant: **Interdigital Patent Holdings, Inc.**
**Wilmington, DE 19809-3727 (US)**

(72) Inventors:
• **TSAI, Allan, Y**
  **Wilmington, 19809-3727 (US)**
• **ZHANG, Guodong**
  **Wilmington, 19809-3727 (US)**
• **LI, Qing**
  **Wilmington, 19809-3727 (US)**
• **IYER, Lakshmi, R**
  **Wilmington, 19809-3727 (US)**
• **ADJAKPLE, Pascal, M**
  **Wilmington, 19809-3727 (US)**
• **MURRAY, Joseph, M**
  **Wilmington, 19809-3727 (US)**

(74) Representative: **D Young & Co LLP**
**120 Holborn**
**London EC1N 2DY (GB)**

Remarks:
This application was filed on 13-06-2023 as a divisional application to the application mentioned under INID code 62.

(54) **SUPERFRAME STRUCTURE AND PAGING OPERATIONS IN NEW RADIO**

(57) The present application is at least directed to a non-transitory memory including instructions stored thereon for paging in a beam sweeping superframe. The beam sweeping superframe including a paging frame. The paging frame including a paging burst and the paging burst including symbols. One of the symbols relates to a paging occasion. A processor is operably coupled to the non-transitory memory. The processor is capable of executing instructions that cause the apparatus to transmit, to a first user equipment, a first paging indication carried on the paging occasion at a first beam. The processor is also capable of executing instructions that cause the apparatus to transmit, to a second user equipment, a second paging indication carried on the paging occasion at a second beam, where the second beam is different from the first beam. The application is also directed to an apparatus that pages in a beam sweeping superframe in new radio.

EP 4 250 658 A2

*FIG. 7A* cont.

**Description**

**CROSS-REFERENCE TO RELATED APPLICATION**

This application claims the benefit of priority of U. S. Provisional application no. 62/475,744 filed March 23, 2017, titled "Superframe Structure and Operations in New Radio," the contents of which is incorporated by reference in its entirety.

**FIELD**

The present application is directed to a superframe structure and methods involving a superframe structure in new radio (NR).

**BACKGROUND**

NR supports both low frequency - new radio (LF-NR), i.e., sub 6 GHz and high frequency - new radio (HF-NR), i.e., above 6 GHz deployment. In LF-NR, a single wider beam may be sufficient for coverage. However, in HF-NR, a single wider beam may be insufficient for coverage due to significant attenuation at very high frequency. As a result, multiple narrow beams are preferred for enhancing coverage.

A NR system may support both single-beam (or single sector) and multi-beam (multi-sector) approaches for initial access signal transmission, paging, and beam management. However, optimizing initial access, paging, and beam management, with beam sweeping designs in NR systems is desired. More specifically, optimizing such designs in terms of frame, subframe and slot structure is desired in NR systems.

**SUMMARY**

This summary is provided to introduce a selection of concepts in a simplified form that are further described below in the Detailed Description. This Summary is not intended to limit the scope of the claimed subject matter. The foregoing needs are met, to a great extent, by the present application directed top a superframe structure and operations in NR.

One aspect of the application describes an apparatus. The apparatus includes a non-transitory memory including instructions stored thereon for paging in a beam sweeping superframe. The beam sweeping superframe includes a paging frame. The paging frame includes a paging burst and the paging burst includes symbols. One of the symbols relates to a paging occasion. A processor is operably coupled to the non-transitory memory. The processor is capable of executing instructions that cause the apparatus to transmit, to a first user equipment, a first paging indication carried on the paging occasion at a first beam. The processor is also capable of executing the instruction that cause the apparatus to transmit, to a second user equipment, a second paging indication carried on the paging occasion at a second beam. The second beam is different from the first beam.

Another aspect of the application describes an apparatus. The apparatus includes a non-transitory memory including instructions stored thereon for paging in a beam-sweeping superframe in the new radio. The apparatus also includes a processor operably coupled to the non-transitory memory. The processor is capable of executing the instructions of checking, in a common physical downlink control channel in a subframe at a paging occasion, for a paging indication in a paging radio network temporary identifier. The processor is also capable of executing the instructions of decoding, from the paging indication, resource allocation information for a paging message carried on either a physical downlink shared channel (PDSCH) or user equipment specific physical downlink control channel (UE PDCCH). The processor is further capable of executing the instructions of accessing the paging message carried on either the PDSCH or UE specific PDCCH (i.e. the UE specific DCIs carried on the PDCCH at the UE search space or on UE's PDSCH). The processor is even further capable of executing the instructions of decoding radio resource control information in the paging message. The processor is still further capable of executing the instructions of obtaining the paging message.

There has thus been outlined, rather broadly, certain embodiments of the invention in order that the detailed description thereof may be better understood, and in order that the present contribution to the art may be better appreciated.

**BRIEF DESCRIPTION OF THE DRAWINGS**

In order to facilitate a more robust understanding of the application, reference is now made to the accompanying drawings, in which like elements are referenced with like numerals. These drawings should not be construed to limit the application and are intended only to be illustrative.

FIG. 1A illustrates an exemplary communications system according to an embodiment of the application.

FIG. 1B illustrates an exemplary apparatus configured for wireless communication according to an embodiment of the application.

FIG. 1C illustrates a system diagram of a radio access network and a core network according to an embodiment of the application.

FIG. 1D illustrates a system diagram of a radio access network and a core network according to another embodiment of the application.

FIG. 1E illustrates a system diagram of a radio access network and a core network according to yet another embodiment of the application.

FIG. 1F illustrates a block diagram of an exemplary computing system in communication with one or more networks previously shown in FIGs. 1A, 1C, 1D and 1E according to an embodiment of the application.

FIG. 2 illustrates cell coverage with sector beams and multiple, high-gain narrow beams.

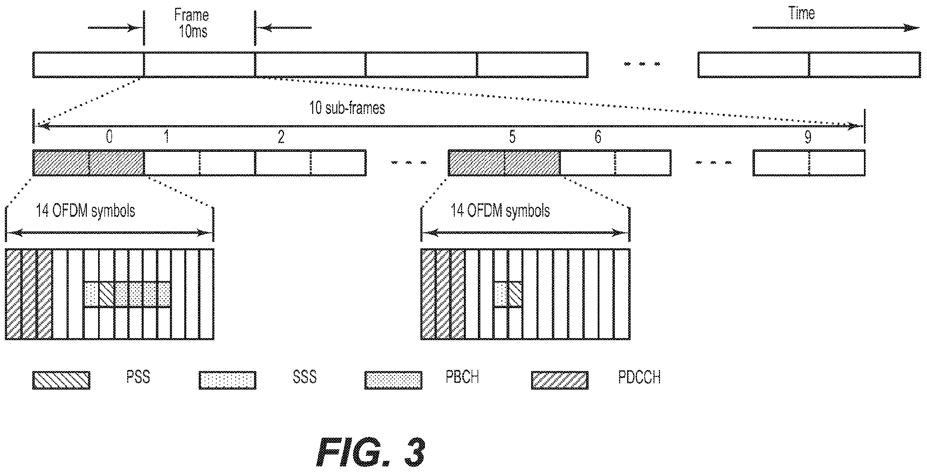

FIG. 3 illustrates a LTE frame structure with a primary synchronous sequence (PSS), a secondary synchronous sequence (SSS), and physical broadcast channel (PBCH) allocations.

FIG. 4 illustrates an example of cell and sector sweeping.

FIGs. 5A and 5B illustrate a superframe with cell sweeping.

FIG. 6 illustrates a PSS, SSS, PBCH and secondary physical broadcast channel (SPBCH) on the same sweeping beam.

FIGs. 7A and 7B illustrate a superframe with sector sweeping.

FIGs. 8A and 8B respectively illustrate NR systems supporting single and multi-beam systems.

FIGs. 9A and 9B illustrate new radio synchronization signal (NR SS) burst set design examples at frequency division duplex (FDD) > 6 GHz and a subcarrier spacing equal to 60 KHz.

FIG. 10 illustrates a burst set design example at FDD > 6 GHz and the SS block not contiguously being distributed in a subframe.

FIG. 11A and 11B illustrate a NR SS burst set design example at FDD < 6 GHz and a subcarrier spacing of 15 KHz.

FIG. 12 illustrates a NR PBCH demodulation reference signal (DMRS) being used for indication of PBCH locations when the PBCH burst set periodicity is not equal to the SS burst set periodicity and when the frequency band > 6 GHz.

FIG. 13A and 13B illustrate NR PBCH DMRS used for indication of SS timing location when the frequency band > 6 GHz.

FIGs. 14A and 15B illustrate a paging burst with non-scheduled SPBCH.

FIGs. 15A, 15B and 15C illustrate a paging burst with scheduled common PDCCH (cPDCCH).

FIG. 16 illustrates an acknowledge/non-acknowledge (A/N) feedback colliding with a beam sweeping burst in a flexible subframe.

FIG. 17 illustrates a beam sweeping burst not assigned at certain symbols in a flexible subframe.

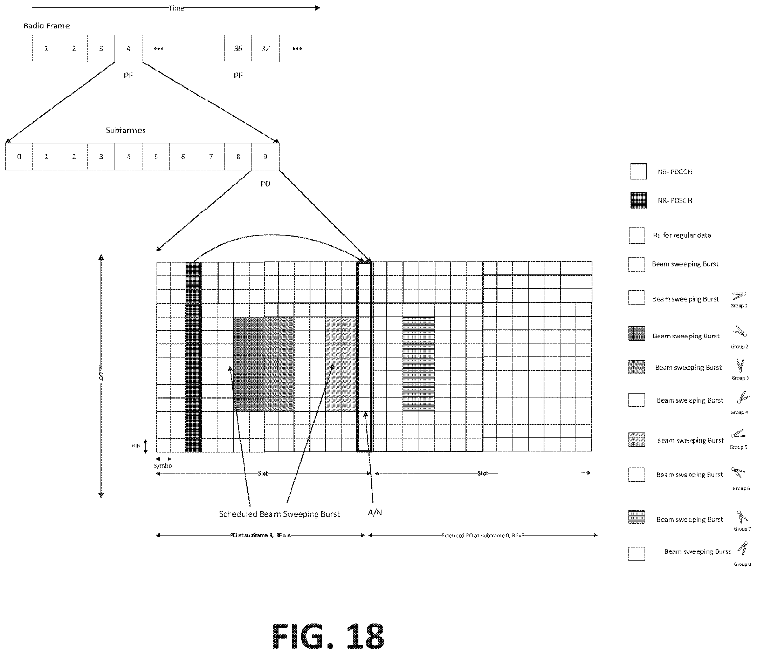

FIG. 18 illustrates a beam sweeping paging occasion (PO) with cross multiple radio frames (RFs).

## DETAILED DESCRIPTION OF THE ILLUSTRATIVE EMBODIMENTS

A detailed description of the illustrative embodiment will be discussed in reference to various figures, embodiments and aspects herein. Although this description provides detailed examples of possible implementations, it should be understood that the details are intended to be examples and thus do not limit the scope of the application.

Reference in this specification to "one embodiment," "an embodiment," "one or more embodiments," "an aspect" or the like means that a particular feature, structure, or characteristic described in connection with the embodiment is included in at least one embodiment of the disclosure. Moreover, the term "embodiment" in various places in the specification is not necessarily referring to the same embodiment. That is, various features are described which may be exhibited by some embodiments and not by the other.

According to an aspect, the application is at least directed to a superframe structure for beamforming-based operations. The superframe structure includes multiple physical channel beam sweeping bursts integrated therein. The structure at least includes a NR-PDCCH (UE specific PDCCH, common PDCCH, group-common PDCCH), PDSCH, SS bursts (PSS/SSS+PBCH, SPBCH), and paging bursts.

According to yet another aspect, a non-scheduled physical channel and scheduled physical channel are disclosed. The channels include paging mechanisms within the beam-sweeping superframe.

Definitions and Acronyms

Provided below are definitions for terms and phrases commonly used in this application in Table 1.

**Table 1**

| Acronym | Term or Phrase |
|---------|----------------|
| A/N | Ack/Nack |
| BRS | Beam Reference Signal |
| CE | Control Element |
| CQI | Channel Quality Indicator |
| DL | Downlink |
| DRX | Discontinuous Reception |
| eMBB | enhanced Mobile Broadband |
| ETWS | Earthquake and Tsunami Warning System |
| FDD | Frequency Division Duplex |
| HARQ | Hybrid Automatic Repeat Request |
| KPI | Key Performance Indicators |
| LTE | Long Term Evolution |
| MAC | Medium Access Control |
| MIB | Master Information Block |
| mMTC | massive Machine Type Communication |
| NACK | Non-ACKnowledgement |
| NR | New Radio |
| PBCH | Physical Broadcast Channel |
| PDCCH | Physical Downlink Control Channel |
| PDSCH | Physical Downlink Shared Data Channel |
| PRACH | Physical Random Access Channel |
| PRB | Physical Resource Block |
| RAN | Radio Access Network |
| RNTI | Radio Network Temporary Identifier |
| P-RNTI | Paging Radio Network Temporary Identifier |
| RRC | Radio Resource Control |
| RSRP | Reference Signal Received Power |
| RSSI | Received Signal Strength Indicator |
| SI | System Information |
| SIB | System Information Block |
| TDD | Time Division Duplex |
| TPC | Transmit Power Control |
| UE | User Equipment |
| UL | Uplink |
| URLLC | Ultra-Reliable and Low Latency Communications |

General Architecture

The 3rd Generation Partnership Project (3GPP) develops technical standards for cellular telecommunications network technologies, including radio access, the core transport network, and service capabilities - including work on codecs, security, and quality of service. Recent radio access technology (RAT) standards include WCDMA (commonly referred as 3G), LTE (commonly referred as 4G), and LTE-Advanced standards. 3GPP has begun working on the standardization of next generation cellular technology, called NR, which is also referred to as "5G". 3 GPP NR standards development is expected to include the definition of next generation radio access technology (new RAT), which is expected to include the provision of new flexible radio access below 6 GHz, and the provision of new ultra-mobile broadband radio access above 6 GHz. The flexible radio access is expected to consist of a new, non-backwards compatible radio access in new spectrum below 6 GHz, and it is expected to include different operating modes that can be multiplexed together in the same spectrum to address a broad set of 3GPP NR use cases with diverging requirements. The ultra-mobile broadband is expected to include cmWave and mmWave spectrum that will provide the opportunity for ultra-mobile broadband access for, e.g., indoor applications and hotspots. In particular, the ultra-mobile broadband is expected to share a common design framework with the flexible radio access below 6 GHz, with cmWave and mmWave specific design optimizations.

3GPP has identified a variety of use cases that NR is expected to support, resulting in a wide variety of user experience requirements for data rate, latency, and mobility. The use cases include the following general categories: enhanced mobile broadband (e.g., broadband access in dense areas, indoor ultra-high broadband access, broadband access in a crowd, 50+ Mbps everywhere, ultra-low cost broadband access, mobile broadband in vehicles), critical communications, massive machine type communications, network operation (e.g., network slicing, routing, migration and interworking, energy savings), and enhanced vehicle-to-everything (eV2X) communications. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, and virtual reality to name a few. All of these use cases and others are contemplated herein.

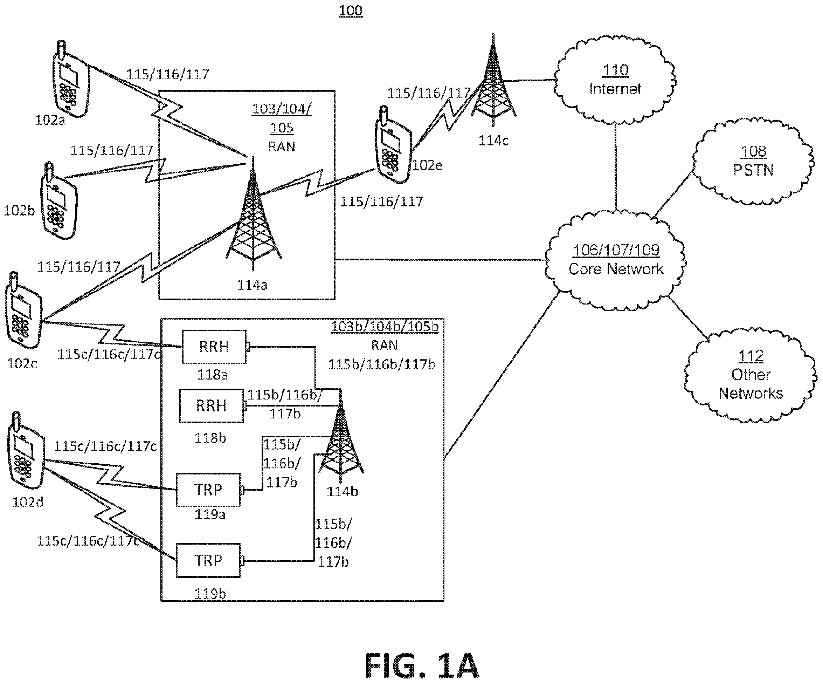

FIG. 1A illustrates one embodiment of an example communications system 100 in which the methods and apparatuses described and claimed herein may be embodied. As shown, the example communications system 100 may include wireless transmit/receive units (WTRUs) 102a, 102b, 102c, and/or 102d (which generally or collectively may be referred to as WTRU 102), a radio access network (RAN) 103/104/105/103b/104b/105b, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d, 102e may be any type of apparatus or device configured to operate and/or communicate in a wireless environment. Although each WTRU 102a, 102b, 102c, 102d, 102e is depicted in FIGs. 1A-E as a hand-held wireless communications apparatus, it is understood that with the wide variety of use cases contemplated for 5G wireless communications, each WTRU may comprise or be embodied in any type of apparatus or device configured to transmit and/or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, truck, train, or airplane, and the like.

The communications system 100 may also include a base station 114a and a base station 114b. Base stations 114a may be any type of device configured to wirelessly interface with at least one of the WTRUs 102a, 102b, 102c to facilitate access to one or more communication networks, such as the core network 106/107/109, the Internet 110, and/or the other networks 112. Base stations 114b may be any type of device configured to wiredly and/or wirelessly interface with at least one of the RRHs (Remote Radio Heads) 118a, 118b and/or TRPs (Transmission and Reception Points) 119a, 119b to facilitate access to one or more communication networks, such as the core network 106/107/109, the Internet 110, and/or the other networks 112. RRHs 118a, 118b may be any type of device configured to wirelessly interface with at least one of the WTRU 102c, to facilitate access to one or more communication networks, such as the core network 106/107/109, the Internet 110, and/or the other networks 112. TRPs 119a, 119b may be any type of device configured to wirelessly interface with at least one of the WTRU 102d, to facilitate access to one or more communication networks, such as the core network 106/107/109, the Internet 110, and/or the other networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114b may be part of the RAN 103b/104b/105b, which may also include other base stations and/or network elements (not shown), such as a base station controller (BSC), a radio network controller (RNC), relay nodes, etc. The base station 114a may be configured to transmit and/or receive wireless signals within a particular geographic region, which may be referred to as a cell (not shown). The base station 114b may be configured to transmit and/or receive wired and/or wireless signals within a particular geographic region, which may be referred to as a cell (not shown). The cell may further be divided into cell sectors. For example, the cell associated with the base station 114a may be divided into three sectors. Thus, in an embodiment, the base station 114a may include three transceivers, e.g., one for each sector of the cell. In an embodiment, the base station 114a may employ multiple-input multiple output (MIMO) technology and, therefore, may utilize multiple transceivers for each sector of the cell.

The base stations 114a may communicate with one or more of the WTRUs 102a, 102b, 102c over an air interface 115/116/117, which may be any suitable wireless communication link (e.g., radio frequency (RF), microwave, infrared (IR), ultraviolet (UV), visible light, cmWave, mmWave, etc.). The air interface 115/116/117 may be established using any suitable radio access technology (RAT).

The base stations 114b may communicate with one or more of the RRHs 118a, 118b and/or TRPs 119a, 119b over a wired or air interface 115b/116b/117b, which may be any suitable wired (e.g., cable, optical fiber, etc.) or wireless communication link (e.g., radio frequency (RF), microwave, infrared (IR), ultraviolet (UV), visible light, cmWave, mmWave, etc.). The air interface 115b/116b/117b may be established using any suitable radio access technology (RAT).

The RRHs 118a, 118b and/or TRPs 119a, 119b may communicate with one or more of the WTRUs 102c, 102d over an air interface 115c/116c/117c, which may be any suitable wireless communication link (e.g., radio frequency (RF), microwave, infrared (IR), ultraviolet (UV), visible light, cmWave, mmWave, etc.). The air interface 115c/116c/117c may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b and TRPs 119a, 119b in the RAN 103b/104b/105b and the WTRUs 102c, 102d, may implement a radio technology such as Universal Mobile Telecommunications System (UMTS) Terrestrial Radio Access (UTRA), which may establish the air interface 115/116/117 or 115c/116c/117c respectively using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c, or RRHs 118a, 118b and TRPs 119a, 119b in the RAN 103b/104b/105b and the WTRUs 102c, 102d, may implement a radio technology such as Evolved UMTS Terrestrial Radio Access (E-UTRA), which may establish the air interface 115/116/117 or 115c/116c/117c respectively using Long Term Evolution (LTE) and/or LTE-Advanced (LTE-A). In the future, the air interface 115/116/117 may implement 3GPP NR technology.

In an embodiment, the base station 114a in the RAN 103/104/105 and the WTRUs 102a, 102b, 102c, or RRHs 118a, 118b and TRPs 119a, 119b in the RAN 103b/104b/105b and the WTRUs 102c, 102d, may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In an embodiment, the base station 114c and the WTRUs 102e, may implement a radio technology such as IEEE 802.11 to establish a wireless local area network (WLAN). In an embodiment, the base station 114c and the WTRUs 102d, may implement a radio technology such as IEEE 802.15 to establish a wireless personal area network (WPAN). In yet an embodiment, the base station 114c and the WTRUs 102e, may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114c may not be required to access the Internet 110 via the core network 106/107/109.

The RAN 103/104/105 and/or RAN 103b/104b/105b may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication.

Although not shown in FIG. 1A, it will be appreciated that the RAN 103/104/105 and/or RAN 103b/104b/105b and/or the core network 106/107/109 may be in direct or indirect communication with other RANs that employ the same RAT as the RAN 103/104/105 and/or RAN 103b/104b/105b or a different RAT. For example, in addition to being connected to the RAN 103/104/105 and/or RAN 103b/104b/105b, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d, 102e to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 and/or RAN 103b/104b/105b or a different RAT.

Some or all of the WTRUs 102a, 102b, 102c, 102d in the communications system 100 may include multi-mode capabilities, e.g., the WTRUs 102a, 102b, 102c, 102d, and 102e may include multiple transceivers for communicating with different wireless networks over different wireless links. For example, the WTRU 102e shown in FIG. 1A may be configured to communicate with the base station 114a, which may employ a cellular-based radio technology, and with the base station 114c, which may employ an IEEE 802 radio technology.

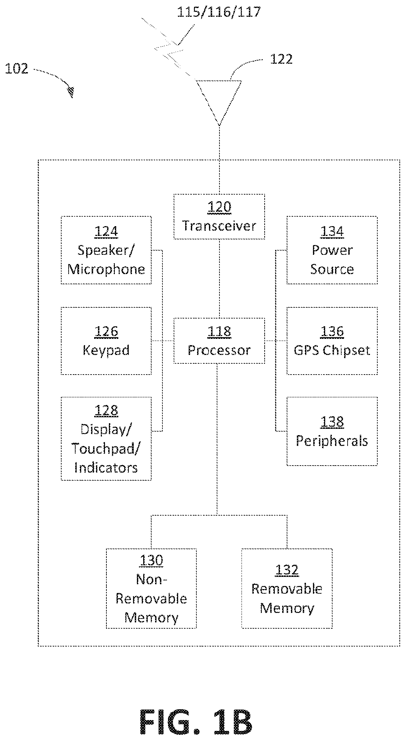

FIG. 1B is a block diagram of an example apparatus or device configured for wireless communications in accordance with the embodiments illustrated herein, such as for example, a WTRU 102. As shown in FIG. 1B, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in an embodiment, the transmit/receive element 122 may be an antenna configured to transmit and/or receive RF signals. In an embodiment, the transmit/receive Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities, e.g., the WTRUs 102a, 102b, 102c, and 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

FIG. 1B is a block diagram of an example apparatus or device configured for wireless communications in accordance with the embodiments illustrated herein, such as for example, a WTRU 102. As shown in FIG. 1B, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet an embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in an embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad/indicators 128 (e.g., a liquid crystal display (LCD) display unit or organic light-emitting diode (OLED) display unit). The processor 118 may also output user data to the speaker/microphone 124, the keypad 126, and/or the display/touchpad/indicators 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In an embodiment, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth® module, a frequency modulated (FM) radio unit, a digital music player, a media player, a video game player module, an Internet browser, and the like.

The WTRU 102 may be embodied in other apparatuses or devices, such as a sensor, consumer electronics, a wearable device such as a smart watch or smart clothing, a medical or eHealth device, a robot, industrial equipment, a drone, a vehicle such as a car, truck, train, or airplane. The WTRU 102 may connect to other components, modules, or systems of such apparatuses or devices via one or more interconnect interfaces, such as an interconnect interface that may comprise one of the peripherals 138.

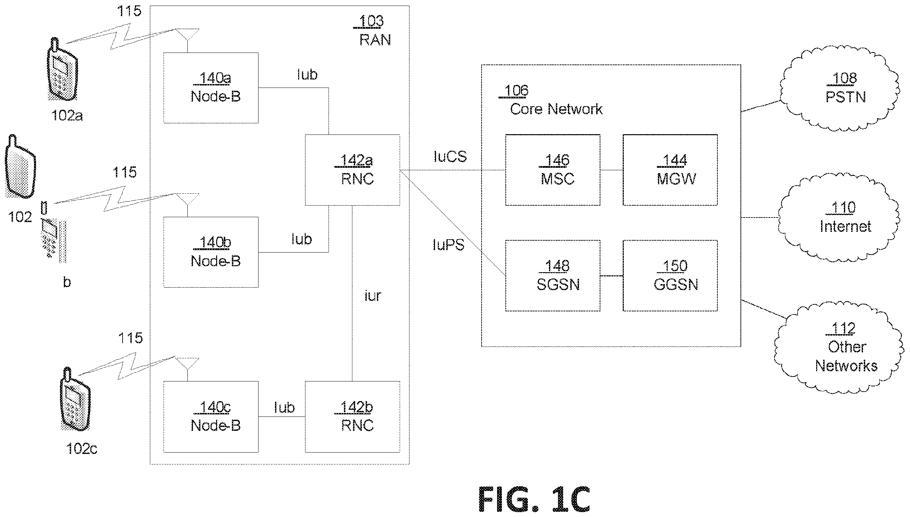

FIG. 1C is a system diagram of the RAN 103 and the core network 106 according to an embodiment. As noted above, the RAN 103 may employ a UTRA radio technology to communicate with the WTRUs 102a, 102b, and 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macro-diversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

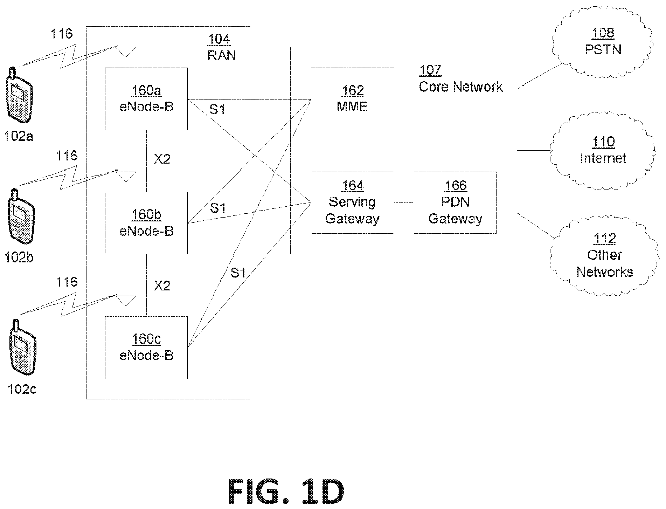

FIG. 1D is a system diagram of the RAN 104 and the core network 107 according to an embodiment. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink and/or downlink, and the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

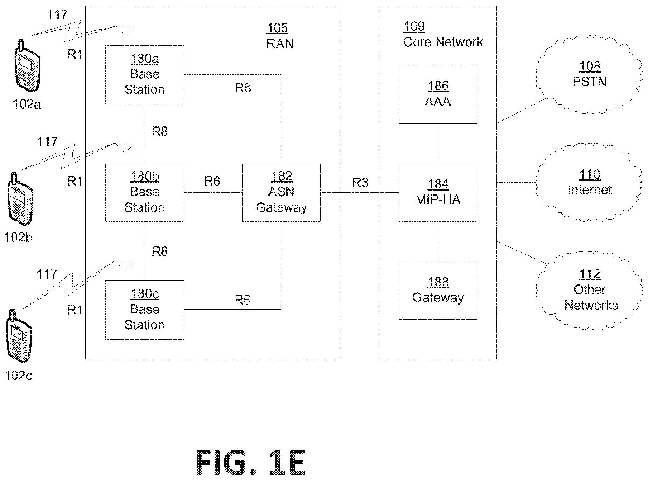

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, and 102c over the air interface 117. As will be further discussed below, the communication links between the different functional entities of the WTRUs 102a, 102b, 102c, the RAN 105, and the core network 109 may be defined as reference points.

As shown in FIG. 1E, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell in the RAN 105 and may include one or more transceivers for communicating with the WTRUs 102a, 102b, 102c over the air interface 117. In an embodiment, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, and 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, and 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. 1E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, and 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. 1E, it will be appreciated that the RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

The core network entities described herein and illustrated in FIGs. 1A, 1C, 1D, and 1E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in FIGs. 1A, 1B, 1C, 1D, and 1E are provided by way of example only, and it is understood that the subject matter disclosed and claimed herein may be embodied or implemented in any similar communication system, whether presently defined or defined in the future.

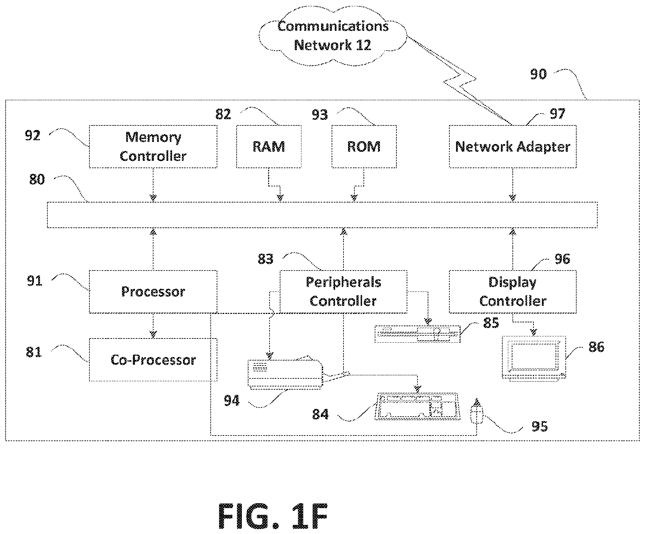

FIG. 1F is a block diagram of an exemplary computing system 90 in which one or more apparatuses of the communications networks illustrated in FIGs. 1A, 1C, 1D and 1E may be embodied, such as certain nodes or functional entities in the RAN 103/104/105, Core Network 106/107/109, PSTN 108, Internet 110, or Other Networks 112. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, and/or any other functionality that enables the computing system 90 to operate in a communications network. Coprocessor 81 is an optional processor, distinct from main processor 91, that may perform additional functions or assist processor 91. Processor 91 and/or coprocessor 81 may receive, generate, and process data related to the methods and apparatuses disclosed herein.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 can be read or changed by processor 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode can access only memory mapped by its own process virtual address space; it cannot access memory within another process's virtual address space unless memory sharing between the processes has been set up.

In addition, computing system 90 may contain peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). One example of the GUI is shown in FIG. 25. Display 86 may be implemented with a CRT-based video display, an LCD-based flat-panel display, gas plasma-based flat-panel display, or a touch-panel. Display controller 96 includes electronic components required to generate a video signal that is sent to display 86.

Still further, computing system 90 may contain communication circuitry, such as for example a network adapter 97, that may be used to connect computing system 90 to an external communications network, such as the RAN 103/104/105, Core Network 106/107/109, PSTN 108, Internet 110, or Other Networks 112 of FIGs. 1A, 1B, 1C, 1D, and 1E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform and/or implement the systems, methods and processes described herein. Specifically, any of the steps, operations or functions described herein may be implemented in the form of such computer executable instructions, executing on the processor of an apparatus or computing system configured for wireless and/or wired network communications. Computer readable storage media include volatile and nonvolatile, removable and non-removable media implemented in any non-transitory (e.g., tangible or physical) method or technology for storage of information, but such computer readable storage media do not includes signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which can be used to store the desired information and which can be accessed by a computing system.

New Radio Requirements

According to an embodiment, 3GPP TR 38.913 defines scenarios and requirements for NR technologies. The Key Performance Indicators (KPIs) for enhanced Mobile BroadBand (eMBB), Ultra-Reliable and Low Latency Communications (URLLC) and massive Machine Type Communications (mMTC) devices are summarized in Table 2.

**Table 2**

| Device | KPI | Description | Requirement |
|---|---|---|---|
| eMBB | Peak data rate | Peak data rate is the highest theoretical data rate which is the received data bits assuming error-free conditions assignable to a single mobile station, when all assignable radio resources for the corresponding link direction are utilized (i.e., excluding radio resources that are used for physical layer synchronization, reference signals or pilots, guard bands and guard times). | 20Gbps for downlink and 10Gbps for uplink |
| | Mobility interruption time | Mobility interruption time means the shortest time duration supported by the system during which a user terminal cannot exchange user plane packets with any base station during transitions. | 0ms for intra-system mobility |
| | Data Plane Latency | For eMBB value, the evaluation needs to consider all typical delays associated with the transfer of the data packets in an efficient way (e.g. applicable procedural delay when resources are not pre-allocated, averaged HARQ retransmission delay, impacts of network architecture). | 4ms for uplink (UL), and 4ms for downlink (DL) |
| URLLC | Control Plane Latency | Control plane latency refers to the time to move from a battery efficient state (e.g., IDLE) to start of continuous data transfer (e.g., ACTIVE). | 10 ms |
| | Data Plane Latency | For URLLC the target for user plane latency for UL and DL. Furthermore, if possible, the latency should also be low enough to support the use of the next generation access technologies as a wireless transport technology that can be used within the next generation access architecture. | 0.5 ms |
| | Reliability | Reliability can be evaluated by the success probability of transmitting X bytes (1) within 1 ms, which is the time it takes to deliver a small data packet from the radio protocol layer 2/3 SDU ingress point to the radio protocol layer 2/3 SDU point of the radio interface, at a certain channel quality (e.g., coverage-edge). NOTE1: Specific value for X is FFS. | 1-10-5 within 1 ms. |

(continued)

| Device | KPI | Description | Requirement |
|---|---|---|---|
| mMTC | Coverage | "Maximum coupling loss" (MCL) in uplink and downlink between device and Base Station site (antenna connector(s)) for a data rate of [X bps], where the data rate is observed at the egress/ingress point of the radio protocol stack in uplink and downlink. | 164 dB |
| | UE Battery Life | User Equipment (UE) battery life can be evaluated by the battery life of the UE without recharge. For mMTC, UE battery life in extreme coverage shall be based on the activity of mobile originated data transfer consisting of [200 bytes] Uplink (UL) per day followed by [20 bytes] Downlink (DL) from Maximum Coupling Loss (MCL) of dB, assuming a stored energy capacity of [5Wh]. | 15 years |
| | Connection Density | Connection density refers to total number of devices fulfilling specific Quality of Service (QoS) per unit area (per km2). QoS definition should take into account the amount of data or access request generated within a time t_gen that can be sent or received within a given time, t_sendrx, with x% probability. | 106 devices/km2 |

NR Beamformed Access

3GPP standardization efforts are currently underway to design the framework for beamformed access. The characteristics of the wireless channel at higher frequencies are significantly different from the sub-6GHz channel that LTE is currently deployed on. The key challenge of designing the new Radio Access Technology (RAT) for higher frequencies will be in overcoming the larger path-loss at higher frequency bands. In addition to this larger path-loss, the higher frequencies are subject to unfavorable scattering environment due to blockage caused by poor diffraction. Therefore, MIMO/beamforming is essential in guaranteeing a sufficient signal level at the receiver end.

Relying solely on MIMO digital precoding used by digital Beam Forming (BF) to compensate for the additional path-loss in higher frequencies appears inadequate to provide similar coverage below 6 GHz. Thus, the use of analog beamforming for achieving additional gain can be an alternative in conjunction with digital beamforming. A sufficiently narrow beam should be formed with lots of antenna elements. This is likely to be quite different from the one assumed for the LTE evaluations. For large beamforming gain, the beam-width correspondingly tends to be reduced. Hence the beam with the large directional antenna gain cannot cover the whole horizontal sector area typically in a 3-sector configuration. The limiting factors of the number of concurrent high gain beams include the cost and complexity of the transceiver architecture.

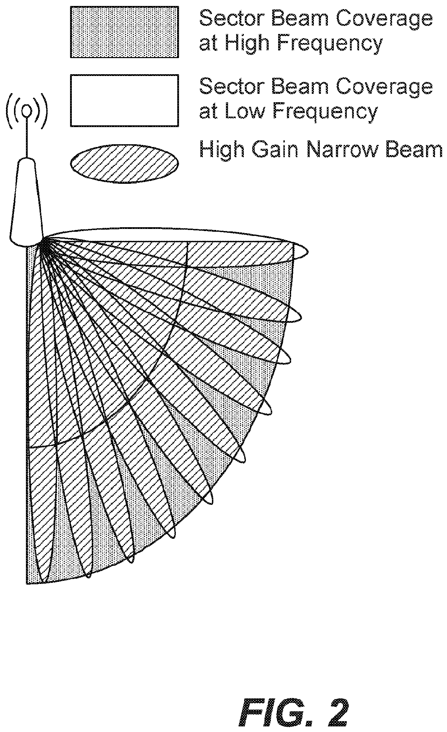

From these observations above, multiple transmissions in the time domain, i.e. beam steering or beam sweeping, with narrow coverage beams are necessary to cover different serving areas. Inherently, the analog beam of a subarray can be steered toward a single direction at the time resolution of an OFDM symbol or any appropriate time interval unit defined for beam steering across different serving areas within the cell. Hence, the number of subarrays determines the number of beam directions, and the corresponding coverage on each OFDM symbol or time interval unit defined for the purpose of beams steering. This concept is illustrated in FIG. 2 where the coverage of a sector level cell is achieved with sector beams and multiple high gain narrow beams. Hence, for analog and hybrid beamforming with massive MIMO, multiple transmissions in time domain with narrow coverage beams steered to cover different serving areas is essential to cover the whole coverage areas within a serving cell in NR.

DL Synchronization in LTE/LTE-A

In current 3GPP LTE/LTE-A systems, two specially designed physical signals are broadcasted in each cell: the Primary Synchronization Signal (PSS) and the Secondary Synchronization Signal (SSS). The detection of these two signals not only enables time and frequency synchronization, but also provides the UE with the physical layer identity of the cell and the cyclic prefix length. In the case of the initial synchronization, in addition to the detection of synchronization signals, the UE proceeds to decode the Physical Broadcast Channel (PBCH), from which critical system information such as system bandwidth, PHICH information and SFN are obtained.

Superframe with Sweeping Bursts

For NR-HF, much narrower beams are adopted for overcoming the high attenuation or blockage. However, the physical channels carrying common signals or messages to all of the UEs in a cell or a sector require full coverage in the serving area. One approach for improving the coverage with narrow beams is beam sweeping. A superframe structure is envisaged to illustrate the mechanism for multiple physical channel beam sweeping bursts integrated in the time structure.

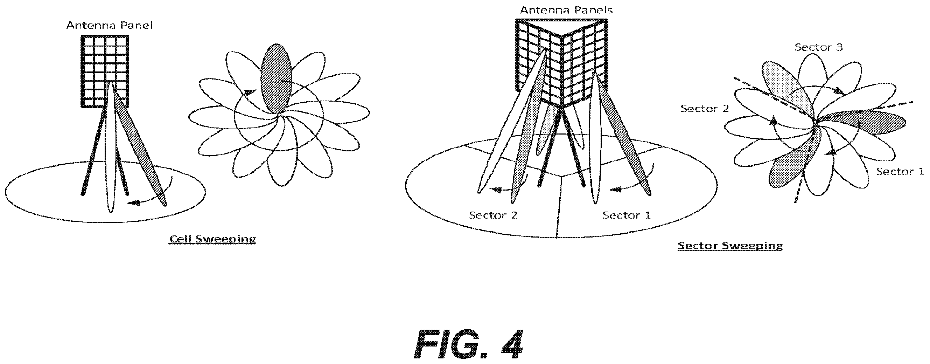

In a NR heterogeneous network, the size of a cell varies significantly, e.g., macro cell and small cell, and beam sweeping may be conducted as cell sweeping or sector sweeping as shown in FIG. 4. Cell sweeping uses fewer beams but takes longer sweeping time for covering the whole service area, and sector sweeping takes less sweeping time for covering the service area but needs more beams simultaneously.

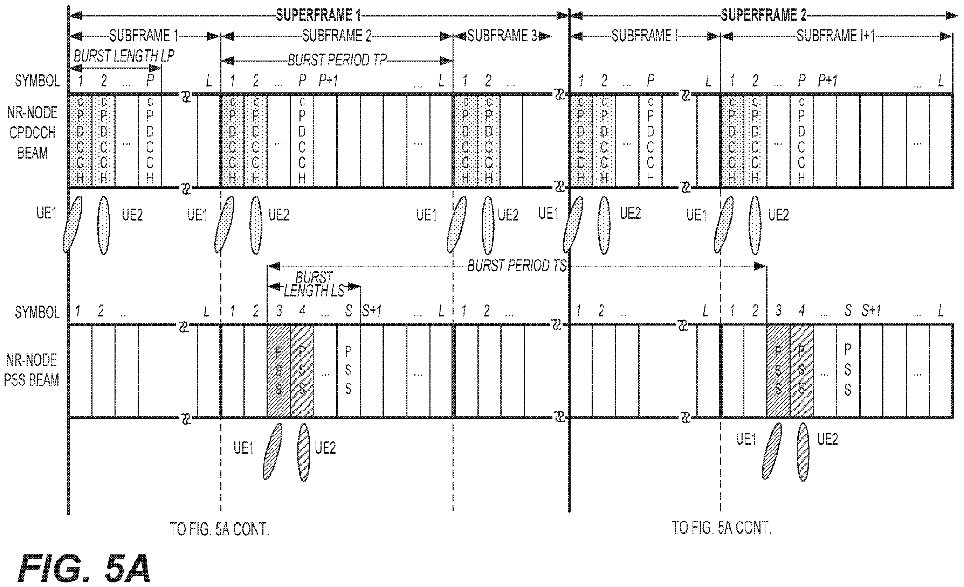

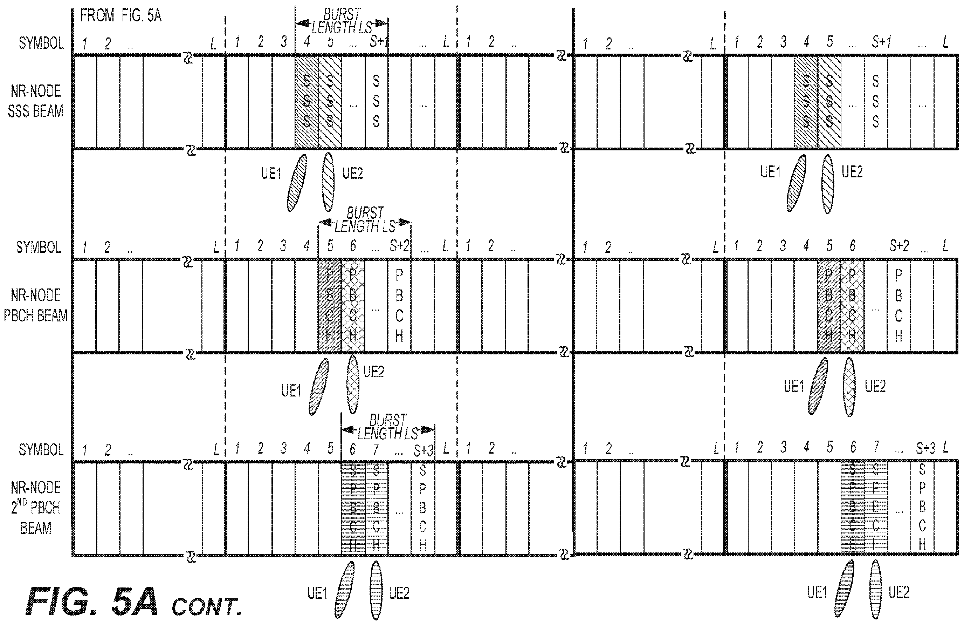

In one aspect of the disclosure, a superframe structure with cell sweeping bursts is exemplarily shown in FIG. 5A. Only one beam pattern is used for simplifying the illustration. A superframe is defined as a logical term for the time structure with different beam sweeping bursts.

Moreover, a superframe, defined as a time interval, contains one or multiple sweeping bursts with one or multi-beam patterns. The duration of a superframe $T_{SF}$ is:

$$T_{SF} = max.\{T_p, T_s, T_{other}\},$$

where $T_p$ is for downlink control channel beam sweeping period such as cPDCCH or gcPDCCH burst period, $T_s$ is for synchronization signal beam sweeping period such as SS burst period, and $T_{other}$ is the period of other bursts such as paging burst not shown in FIG. 5A.

A superframe structure may have beam sweeping bursts as exampled in the following bursts. Common PDCCH (cPDCCH) bursts, i.e. the bursts of physical downlink control channel detected in the common search space which requires certain service coverage for some or all UEs in the area, or group common (gcPDCCH) bursts, i.e. the bursts of group based commonly shared down link control channel which contains the basic information, such as for example, slot structure, System Information (SI), Paging Indication and (PI) common to a group of UEs.

*Burst Period $T_p$:*

Tp = L, if cPDCCH/gcPDCCH is swept in each subframe for simplifying the illucatration, where L is subframe length;
Tp = L/j, if cPDCCH/gcPDCCH is swept in each slot for simplifying the illustration, where j is number of slots within a subframe.

*Burst Length $L_p$:*

If each cPDCCH/gcPDCCH contains m symbols and is transmitted starting at the $n^{th}$ symbol of each subframe, and the total sweeping location is p, then burst length Lp is:

Lp = mp if single pattern beam is used for sweeping, where Lp $\leq$ L - (n - 1);
Lp = [mp/k] (ceiling) if k pattern beams (i.e. m beams sweeping simultaneously) are used for sweeping, where Lp $\leq$ L - (n - 1).

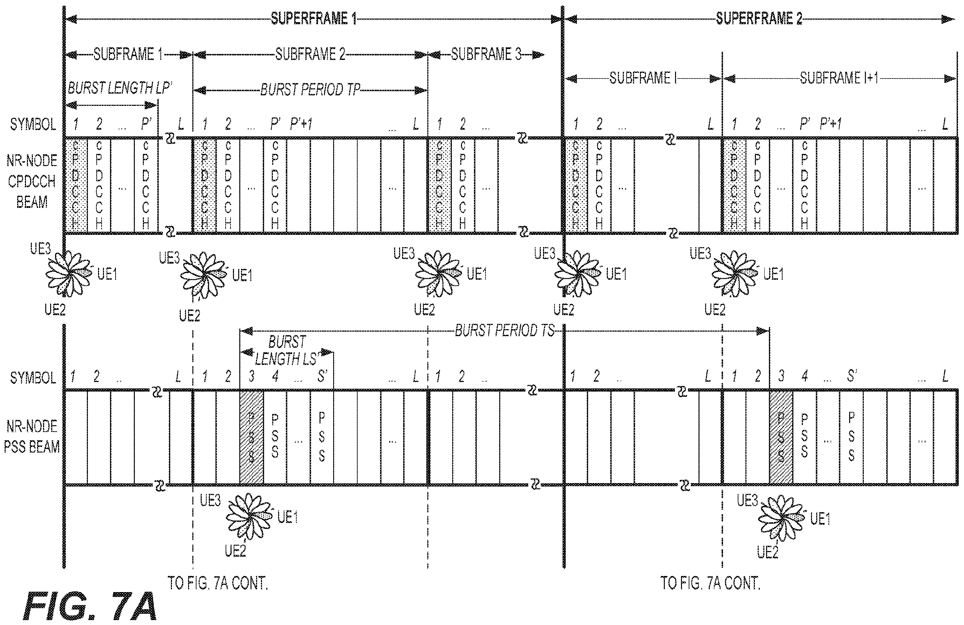

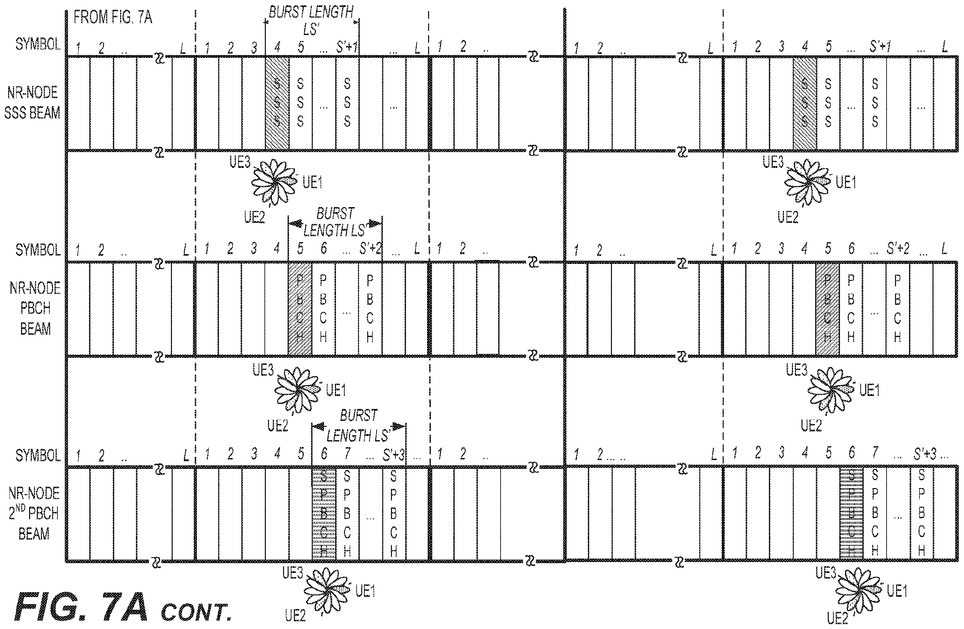

An example of cPDCCH containing m=1 symbol transmitted at the n=1st symbol of each subframe on k=1 pattern beam is illustrated in FIG. 5A for cell based sweeping and in FIG. 7A for sector based sweeping.

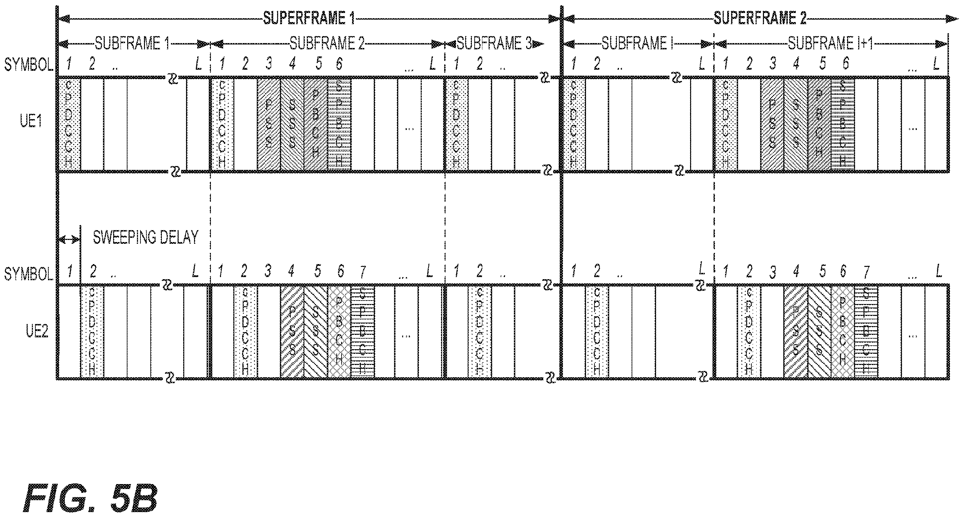

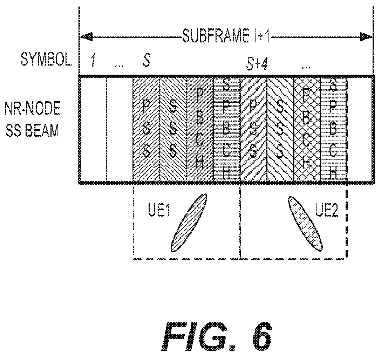

A Synchronization Signal (SS) Burst contains a Primary Synchronization Signal (PSS), Secondary Synchronization Signal (SSS), and Physical Broadcast Channel (PBCH). The SS Burst may also include a Secondary Physical Broadcast Channel (SPBCH) containing the remaining SI and is shown as being next to the PBCH for simplifying the illustration. PSS, SSS, PBCH and SPBCH may be carried on different beams form multi-beam sweeping in parallel as shown in FIG. 5B. In an embodiment however, the SS Burst may also be carried on the same beam and swept in serial for each sweeping location as shown in FIG. 6. In other words, FIG. 6 illustrates PSS, SSS, PBCH and SPBCH on the same sweeping beam. Exemplary definitions of the Burst Period and Burst Length are provided below.

*Burst Period $T_s$:*

*Ts* may be specified with default value, and preconfigured or signaled by the access network gNB.

*Burst Length $L_s$:*

If PSS/SSS/PBCH/SPBCH contains m symbols and is transmitted starting at the nth symbol of a subframe and the total sweeping location is *p*, then burst length *Ls* is

Ls=mp if single pattern beam is used for sweeping, where Ls <Ts;
Ls=□mp / k□(ceiling) if k pattern beams (i.e. m beams sweeping simultaneously) are used for sweeping, where Ls ≤Ts.

An example of a PSS/SSS/PBCH/sPBCH containing m=1 symbol transmitted at the n=3rd symbol of a subframe on k=1 pattern beam is illustrated in FIG. 5A and FIG. 5A Cont. for cell based sweeping and in FIG. 7A Cont. for sector based sweeping.

According to an embodiment, a paging burst is carried on a set of physical channel bursts. For example, the SS burst, e.g., paging indication burst is carried on the secondary broadcast channel (SPBCH) related to the SS bursts; and the cPDCCH/gcPDCCH burst, e.g., also a paging indication burst is carried on the cPDCCH/gcPDCCH bursts.

Since UE1 and UE2 receive the cPDCCH beams at the 1 st and 2nd symbols of the gNB's subframe respectively, the UE's reception of CPDCCH/gcPDCCH are not always aligned with each other. That is, UE2 has a 1-symbol delay from the UE due to the sweeping delay as shown in FIG. 5B. This time shift from the gNB's subframe or slot boundary caused by a beam sweeping delay should be reported or known to gNB. This may also be used for DL and UL grant and other scheduling, i.e., the association between a UE's spatial location and the received swept beam. For example, if UE2 receives a DL beam at symbol 6 for PBCCH, or at symbol 2 for cPDCCH as shown in FIG. 5B, the gNB will use the similar beam configuration for PBCCH at symbol 6 or for cPDCCH at symbol 2 to transmit UE2's dedicated control or data on the DL, i.e., using the spatial Quasi-CoLocation (QCL) property of the DL beam selected by the UE.

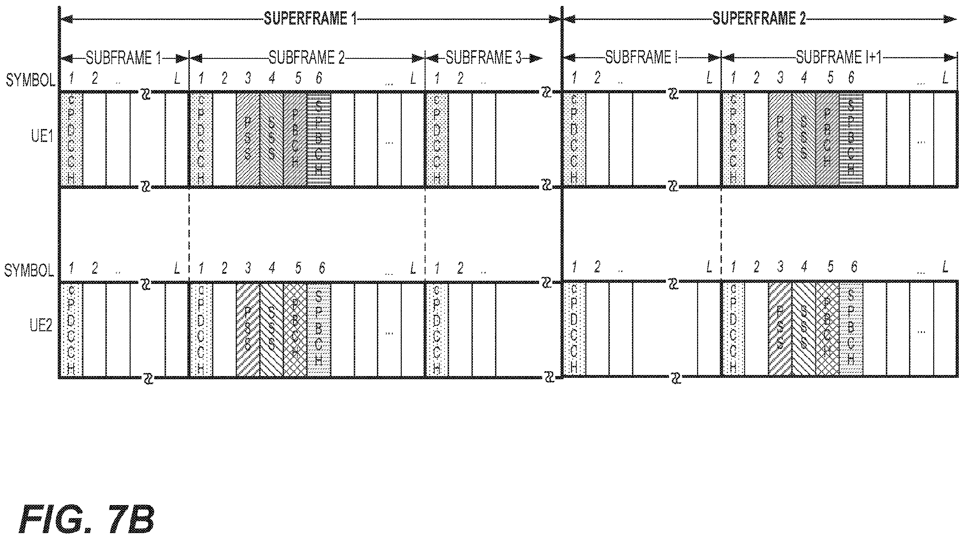

Yet another aspect of the disclosure includes a superframe structure directed to sector sweeping where only one beam pattern is used per sector for simplifying the illustration. The superframe structure is exemplarily illustrated in FIGs. 7A and 7B. Since UE1 and UE2 receive the cPDCCH at the 1 st symbol of the gNB's subframe, the UE1 and UE2 cPDCCH receipts are aligned in time but on separate spatial beams. This is the main distinction between sector and cell sweeping.

Initial Access Burst

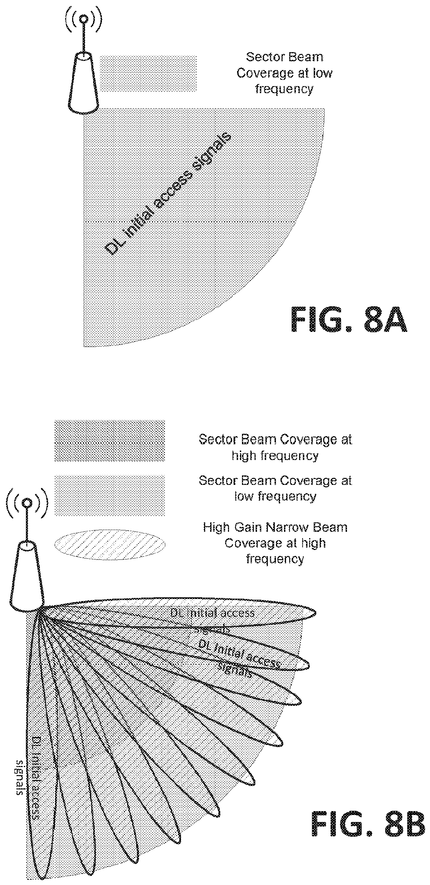

In yet another aspect of the disclosure, NR systems supporting both single beam (or single sector) and a multi-beam (multi-sectors) approach for initial access signal transmission is described. This is exemplarily illustrated in FIGs. 8A and 8B. The initial access signal includes DL synchronization channels, i.e., PSS/SSS and PBCH channel. We define a SS beam sweeping block as a unit of beam sweeping time unit for broadcasting PSS/SSS and PBCH. Each sweeping block may include one or more CP-OFDM symbols. Multiple blocks can form a beam sweeping burst. Here, the length of a SS sweeping burst refers to the number of beam sweeping blocks in a burst. For example, if a beam sweeping burst length is equal to M then there are M sweeping blocks in a burst. The DL beam-sweeping burst may periodically transmit with a period T. This periodic T may be varied with different applications such as URLLC, mMTC or eMBB services. T may also be varied with different frequency bands (or frequency ranges), numerology, and traffic/mobility profile of UE. The SS burst design can be varied with frequency division duplex (FDD), time division duplex (TDD), flexible subframe and numerology. If DL and UL transmissions occur at different frequency bands, i.e., FDD, the SS burst design can be across contiguous subframes without reserving for UL transmission. Hence, it can accommodate more SS blocks in a subframe than TDD. However, DL symbols in a slot or subframe may be reserved for group common PDCCH or UE-specific PDCCH transmissions. Therefore, non-contiguous SS bursts between continuous subframes can be supported in FDD.

On the other hand, for TDD, UL subframe transmissions may be reserved in a radio frame. Hence, the SS burst design has to support non-contiguous SS bursts between continuous subframes as well. SS burst design in TDD has to also support various number of DL-UL subframes in a radio frames. For flexible subframe structures, it supports DL and UL transmission symbols in a subframe. Hence, SS burst designs can support a non-contiguous SS burst block.

Network Initial Access Sweeping

According to another aspect of the disclosure, it is envisaged that a SS block corresponds to 'N' OFDM symbols based on the default subcarrier spacing. Each SS block contains NP OFDM symbols for PSS, and NS OFDM symbols for SSS. SS blocks of different beams are multiplexed in the time domain within an SS burst. NB can equal 0 for some subframes in a SS burst if the PBCH burst set transmission periodicity is not equal to the PSS/SSS (PSS+SSS) burst set transmission periodicity. In each subframe, gNB can transmit SS blocks per SS a burst in the time domain. The value of $M_{SS\_blk}$ (SS blocks per SS burst) will depend on the frame structure, numerology and frequency bands. The SS block in each SS burst may not be contiguous across subframes. The SS burst can be set with a periodical transmission duration denoted as $T_{SS\_burst}$. The $T_{SS\_burst}$ can be chosen from the following rules (dependent on multiple of slot interval): $T_{SS\_burst} = m$ ms, where $m$ = 0.125, 0.25, 0.5, 1, 5, 10, 20, 40, 80, 160 and 320

In a SS burst set, it can have a number of $M_{SS\_burst}$ SS bursts and $T_{SS\_burst\_set}$ is the transmission periodic of a SS burst set. The SS burst set periodic can be defined by the following:

$$T_{SS\_burst\_set} = M_{SS\_burst} \times T_{SS\_burst}$$

Similarly, the PBCH burst set can be defined as a SS burst set structure. That is, each PBCH burst set has $M_{PBCH\_burst}$ PBCH bursts, each PBCH burst is composed by $M_{PBCH\_blk}$ blocks and each PBCH block has $N_B$ OFDM symbols. The PBCH burst sets use the same beams as a SS burst set. The PBCH burst set transmission periodic can be defined as following

$$T_{PBCH\_burst\_set} = M_{PBCH\_burst} \times T_{PBCH\_burst}$$

The parameters can be chosen as $N_P$ = 1, $N_S$ = 1, $N_B$ = 1 or as $N_P$ = 1, $N_S$ = 1, $N_B$ = 2. Then, for a cell below 6 GHz band with 15 kHz subcarrier spacing, each sub-frame will transmit up to $M_{SS\_blk}$ = 1 or $M_{SS\_blk}$ = 2 (< 6 GHz) SS blocks in either a FDD frame structure or TDD frame structure. For a flexible frame structure (below 6GHz band with 15 kHz subcarrier spacing), each sub-frame will transmit up to $M_{SS\_blk}$ = 1 or 2 SS blocks so that UE can perform its Tx beam sweeping in the same sub-frame. These concepts are explained in more detail below.

For other frequency bands and numerology, the parameters can be derived proportionally. For instance, the parameters can be chosen as $N_P$ = 1, $N_S$ = 1, $N_B$ = 1 or $N_P$ = 1, $N_S$ = 1, $N_B$ = 2 for > 6 GHz. Then, for a cell above the 6 GHz band with 60 kHz subcarrier spacing, each slot will transmit up to $M_{SS\_blk}$ = 8 (> 6 GHz, $N_B$ = 1) or $M_{SS\_blk}$ = 6 (> 6 GHz, $N_B$ = 2) SS blocks in either TDD frame structure (includes flexible frame structure). In this case, the number of SS blocks per burst can be summarized in the following equation:

$$M_{SS\_blk} = \left\lceil \frac{N_{slot} \times 14 - \left(N_{DL\_symb} + N_{UL\_symb} + N_{Guard}\right)}{N = \left(N_p + N_S + N_B\right)} \right\rceil,$$

where $N_{slot}$ is the number of aggregated slots, $N_{DL\_symb}$ denotes the reserved number of DL symbols, $N_{UL\_symb}$ denotes the reserved number of UL symbols and $N_{Guard}$ is the number of guard symbols. For other frequency bands and numerology, the parameters can be derived proportionally.

An exemplary illustration of a SS burst set and PBCH burst set design for FDD when the frequency band > 6 GHz is provided below. In this example, in a SS block, it has one PSS $N_P$ = 1, one SSS $N_s$ = 1 and two PBCH symbols $N_B$ = 2 e.g., each SS block uses 2 OFDM symbols and PBCH block use 2 OFDM symbols. Since PBCH and SS are timing multiplexing in time-domain. Therefore, the SS block and PBCH block are time interleaved in slots.

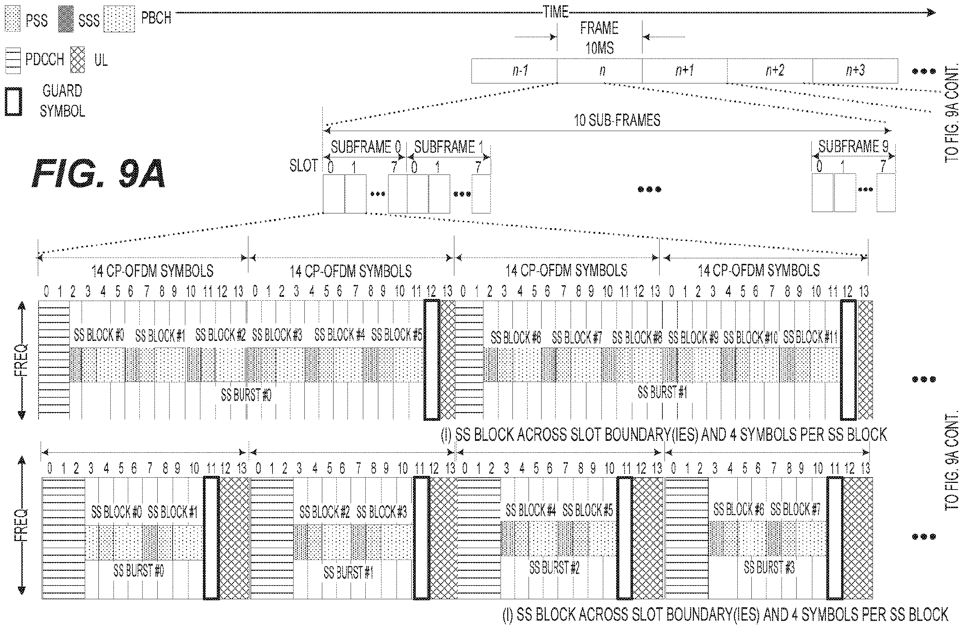

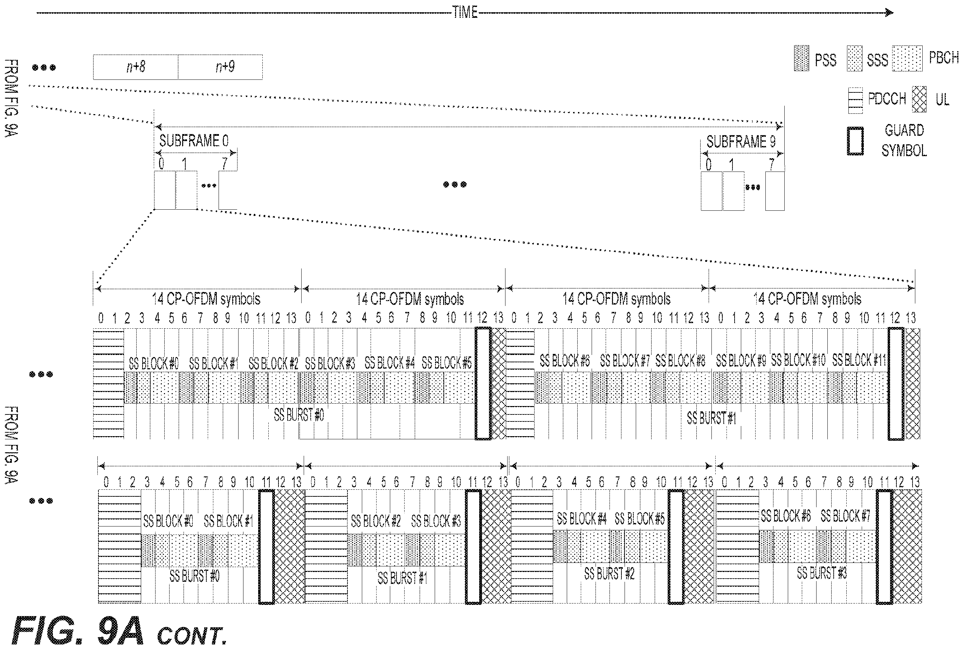

These concepts are described in more detail in FIGs. 9A-B. Here, the setup parameters *are* $N_{slot}$ = 2, $N_{DL\_symb}$ = 2, $N_{UL\_symb}$ = 1, $N_{Guard}$ = 1, one PSS $N_P$ = 1, one SSS $N_s$ = 1 and one PBCH symbols $N_B$ = 1. Accordingly,

$$M_{SS\_blk} = \left\lceil \frac{2 \times 14 - (2 + 1 + 1)}{N = 3} \right\rceil = 8$$ SS burst block in one SS burst.

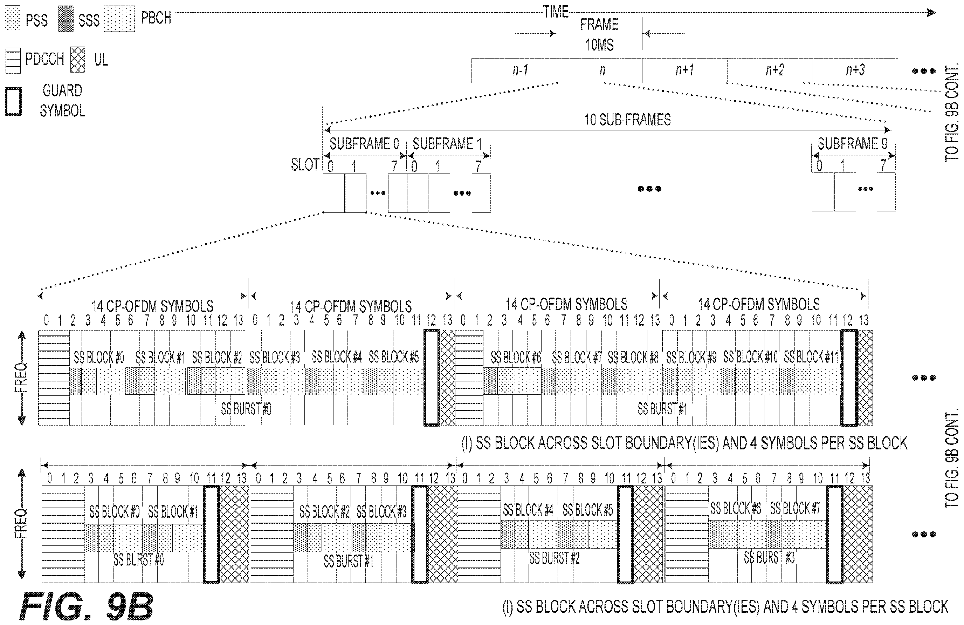

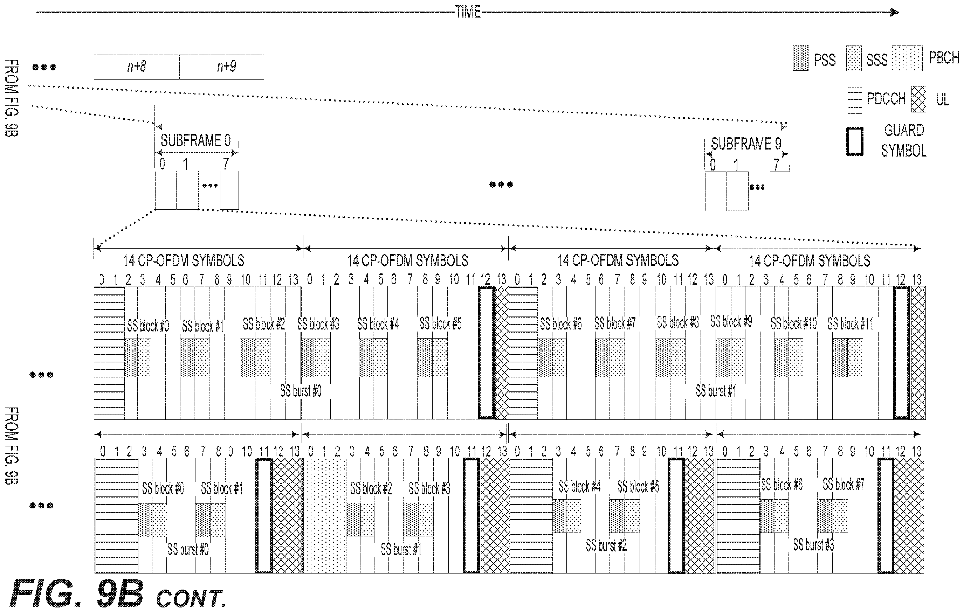

The SS burst set periodicity is equal to 20ms. When $N_{slot}$ > 1, then each SS burst has 6 or 8 SS blocks and it can span two contiguous subframes. In addition, each SS burst is 5 ms away, i.e., the next SS burst periodicity is equal to 5 ms. The PBCH transmission periodicity can be set the same as the SS burst set transmission periodicity, e.g., = 20 ms in this example. The PBCH burst set transmission periodicity can be set equal to $2^n \times$ SS burst set periodicity. The value $n$ = 0, 1, 2, 3, $\cdots$ $N$. The maximum value of $N$ can be configured or predefined. $T_{PBCH\_burst\_set}$ = $2^n \times T_{SS\_burst\_set}$. SSS can be used to signal or indicate the PBCH burst set is associated within a SS burst set duration or not. In the embodiment shown in FIG. 9B. the PBCH burst set transmission periodicity is set to 2 times that of the SS burst set transmission periodicity, e.g., equal to 40 ms, e.g. $T_{PBCH\_burst\_set}$ = 2 $\times$ $T_{SS\_burst\_set}$.

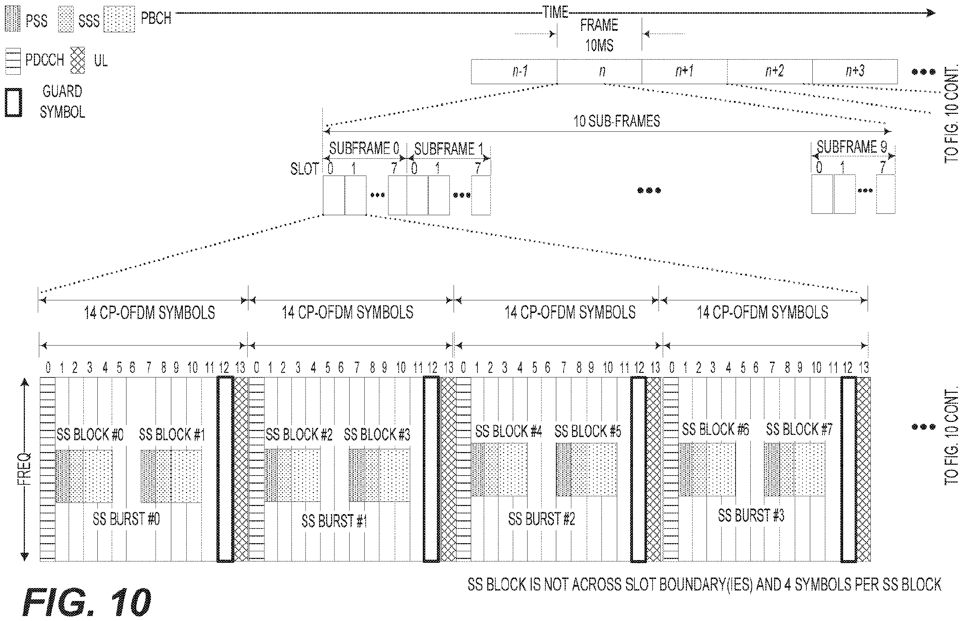

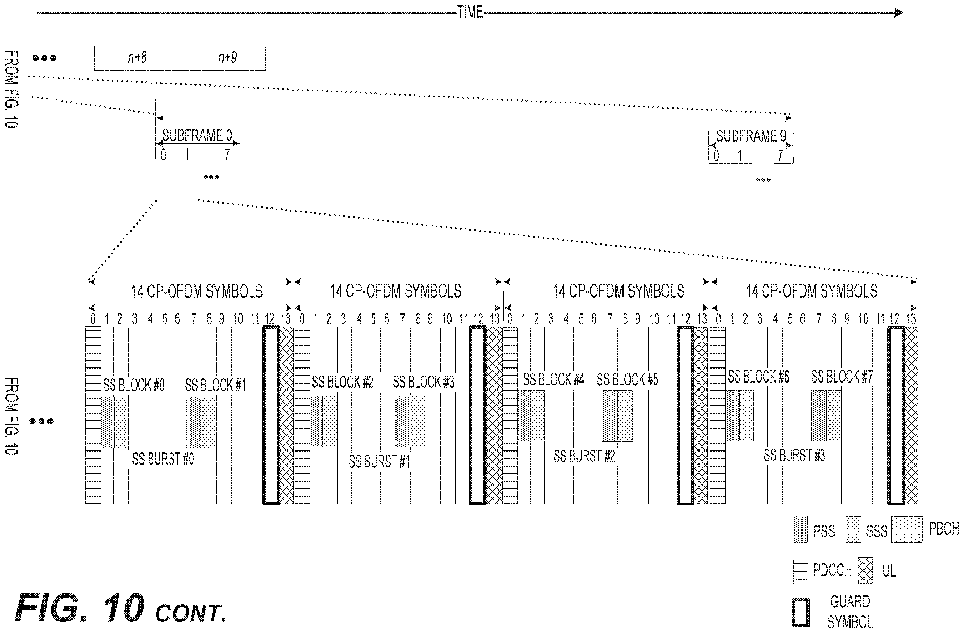

Yet another aspect of the disclosure describes TDD where SS blocks are not contiguously distributed in a subframe. An embodiment of this aspect is exemplarily shown in FIG. 10. Here, the NR SS burst set design example for FDD > 6 GHz and SS block is not contiguously distributed in a subframe. See, for example, the gap between SS Block #0 and SS Block #1 in SS Burst #0.

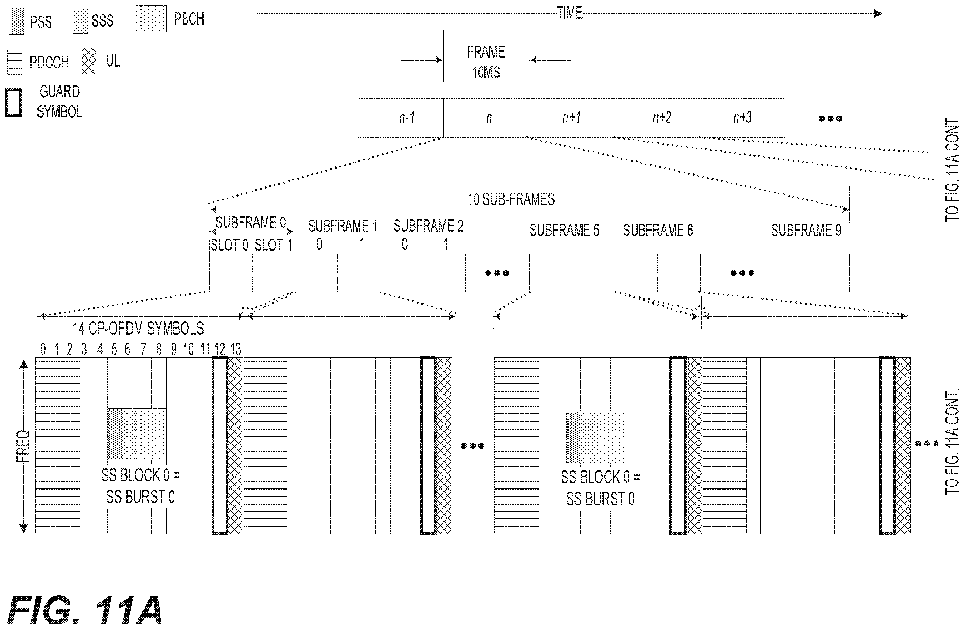

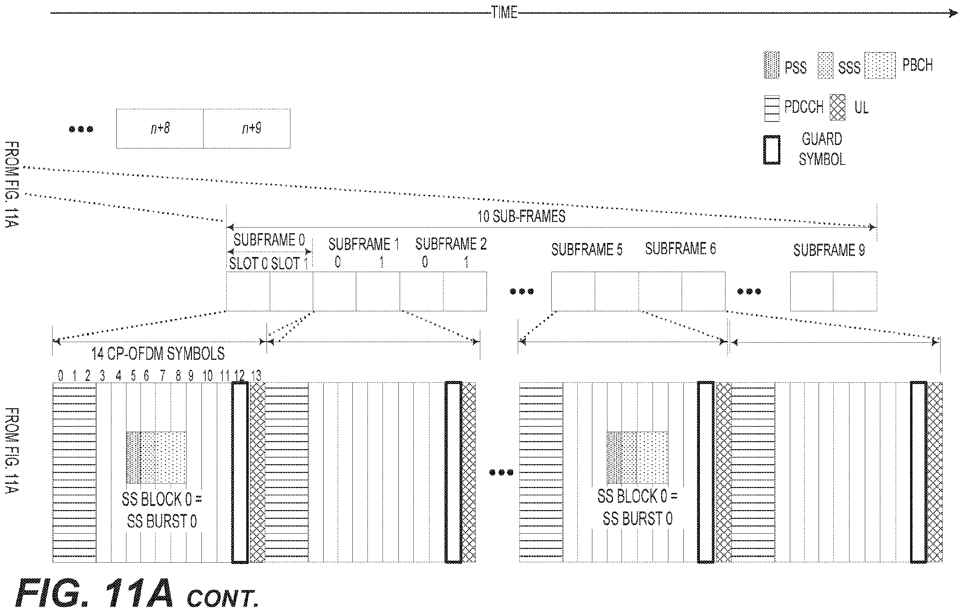

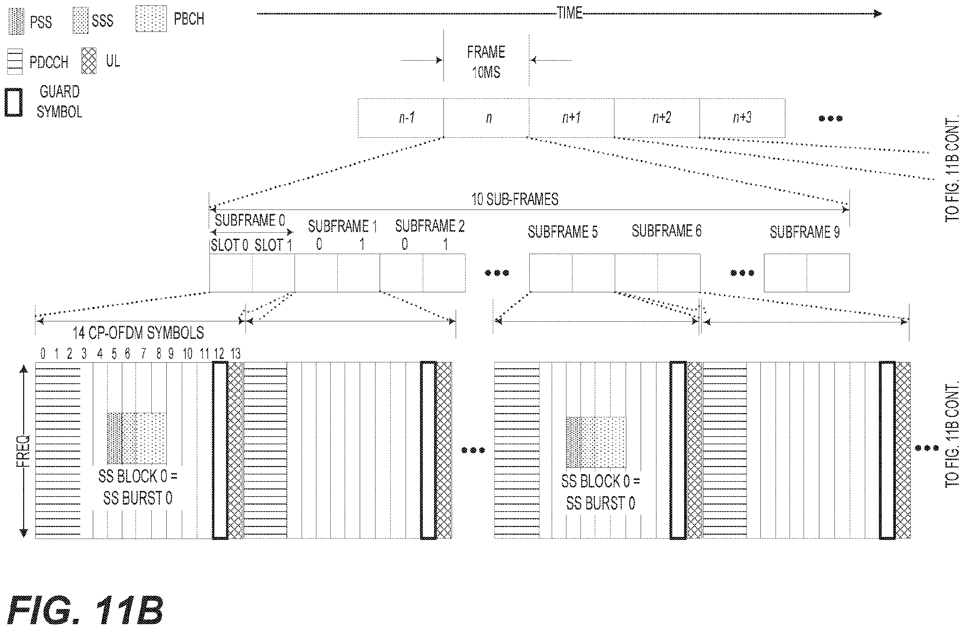

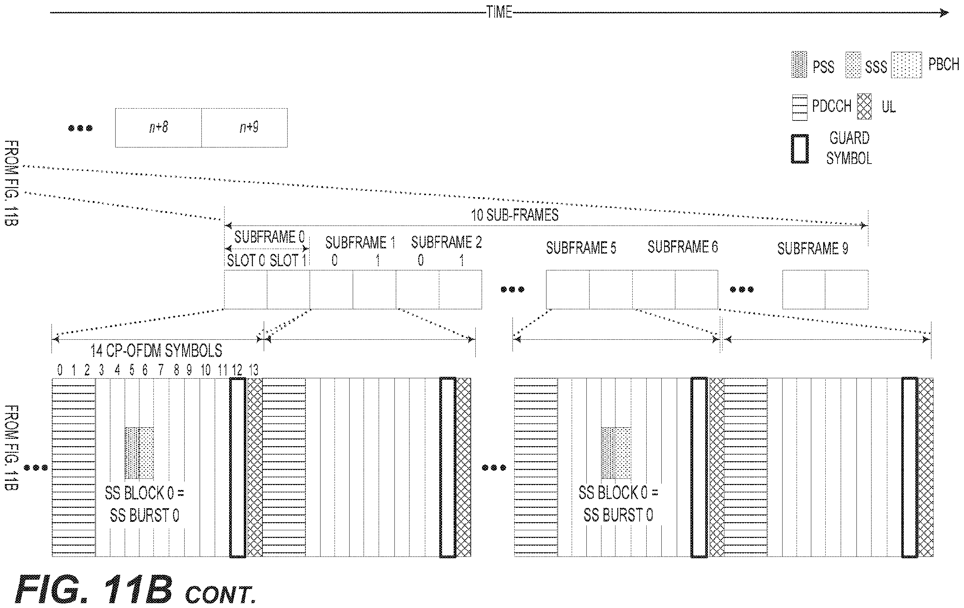

For FDD < 6 GHz, the SS burst M (SS_burst)=1 and M_(SS_blk)=1. An exemplary embodiment of this design is shown in FIGs. 11A and 11B.

In yet a further aspect of the disclosure, if DMRS is used for PBCH demodulation, it may be re-used for PDSCH (if on the same beam). Within the time and frequency resources of an SS block, $N_O$ beams' SS blocks are multiplexed in the spatial domain in an orthogonal or semi-orthogonal manner. In the case of SS blocks for different groups of $N_O$, spatially multiplexed beams are multiplexed in the time domain within an SS burst. The DMRS for PBCH demodulation can be used for the PBCH subframe location indication when the PBCH burst set periodicity is different with the SS burst set. Here, it is envisaged that the UE can use PBCH DMRS to identity the PBCH location. For example, if the SS burst set periodicity is set to 20 ms and PBCH burst set periodicity is set to 40ms, when UE detects a SS block, the PBCH may either coexist with the current detected SS block or possibly 20ms away from the current detected SS block.

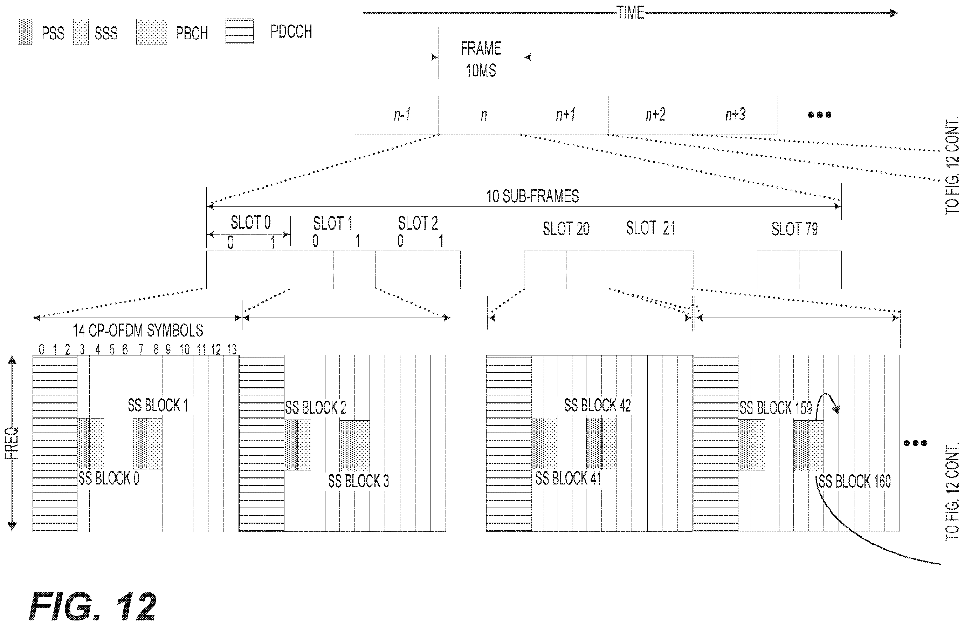

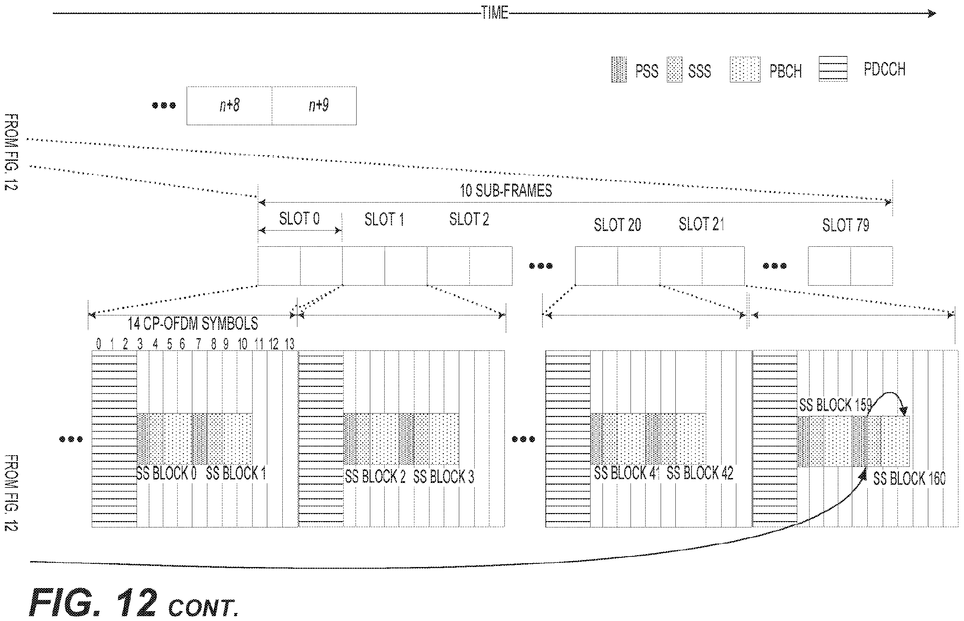

An exemplary embodiment of this design is shown in FIG. 12. Here, for example, the UE can detect the SS block 7 in a SS burst set. However, the UE could have two possible locations of the PBCH. In this example, UE can assume there are two possible locations of PBCH and use the DMRS for conducting hypothesis tests. It is envisaged that PBCH DMRS can have a different power allocation than PBCH data by power boosting. Suppose, for example, that a PBCH uses $K$ ports (e.g. $K = 2$, or 4) for transmission. For any of the antenna ports, $k \in \{n, n + 1, \cdots n + K\}$, the DMRS sequence $r(m)$ for PBCH is defined by:

$$r(m) = \frac{1}{\sqrt{2}}\big(1 - 2c(2m)\big) + j\frac{1}{\sqrt{2}}\big(1 - 2c(2m + 1)\big),$$

where the pseudo-random sequence $c(i)$, $i = 1,..., Q$ is the base sequence and $Q$ is the sequence length to build for the DMRS sequence. The DMRS sequence to port allocation can be described by the following method:

$$a_{k,l}^{(p)} = r\big(g(m)\big),$$

where $a_{k,l}^{(p)}$ is DMRS at the $k$-th subcarrier and $l$-th OFDM and $g(\cdot)$ is a mapping function of DMRS sequence index $m$. The pseudo-random sequence generator shall be initialized with:

$$c_{init} = (\ N_{ID}^{TRP}),$$

where $N_{ID}^{TRP}$ is the TRP ID which is derived from PSS and SSS.

In FIG. 12, the NR PBCH DMRS can be used for indication of PBCH location when the PBCH burst set periodicity does not equal the SS burst set periodicity, and when frequency band > 6 GHz. Here a method for utilization of DMRS and TSS (Third Synchronization Signal for a SS timing index is envisaged. The PBCH DMRS can be used as a TSS for the indication of SS block timing to save RS overhead. The DMRS configuration can use the following setup:

$$c_{init} = (\ n_s, N_{ID}^{TRP}),$$

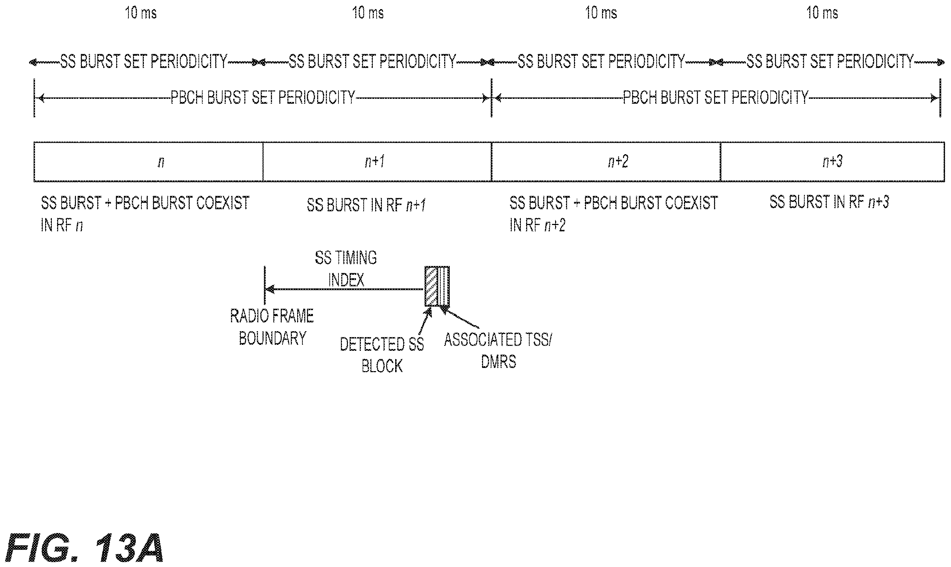

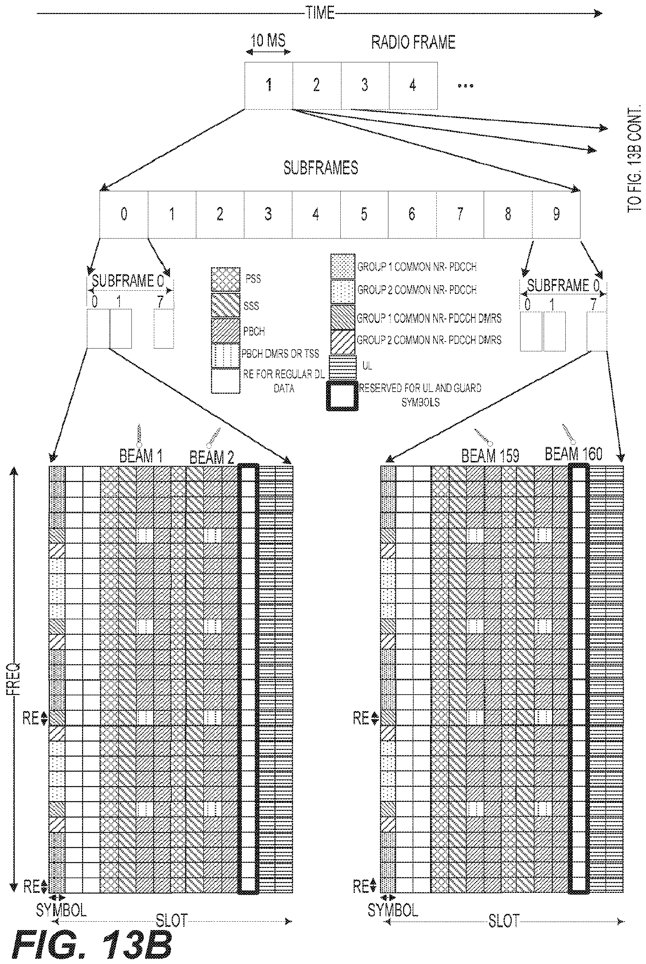

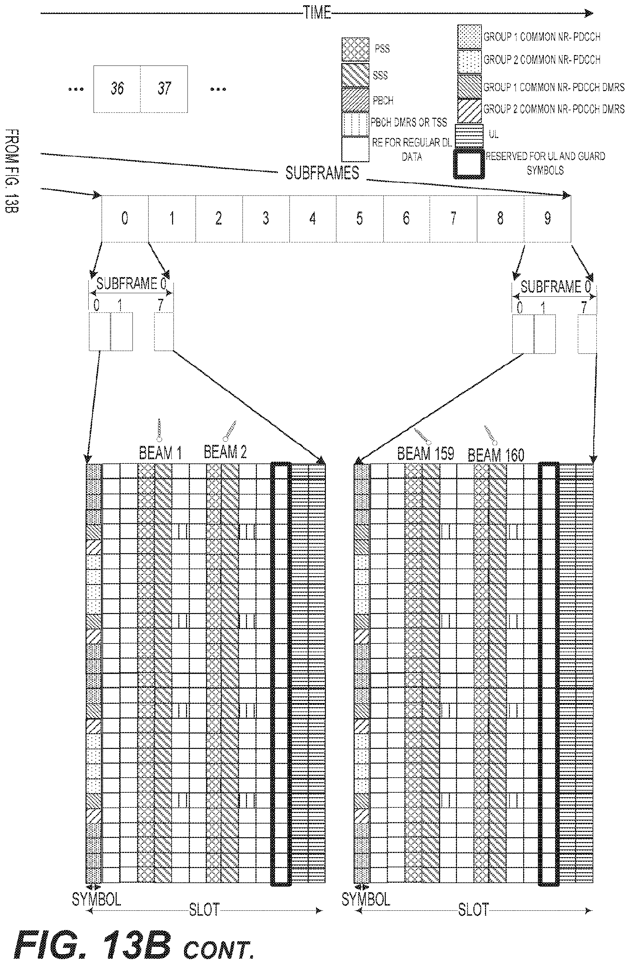

where $n_s$ is the SS block timing index (or offset) to radio frame boundary. In this way, the PBCH bits payload for carrying a SS timing index can be reduced. For example, the PBCH only carries SFN. However, if DMRS carries the offset to the radio frame offset, then UE is able to obtain frame, subframe and slot timing. FIGs. 13A and 13B show examples of DMRS as TSS. When the detected SS block is known to a UE, the UE is able to use DMRS as the timing index (extract $n_s$). Once the timing offset of the detected SS block is known, the UE is able to synthesize the subframe timing, slot timing from $n_s$ and PBCH payload if PBCH carry SFN.

Paging Burst

According to even a further aspect of the disclosure, paging procedure is described which may be used at least for the following purposes in NR: (i) To initiate mobile terminated calls, while a UE is at RRC Idle or Inactive mode, i.e., no RRC connection with gNB and no S 1 connectivity with MME; (ii) To trigger a UE to re-acquire system information via a system information change indication, while at RRC Idle mode; and (iii) To provide an Earthquake and Tsunami Warning System (ETWS) indication to a UE at either RRC Idle or RRC connected mode.

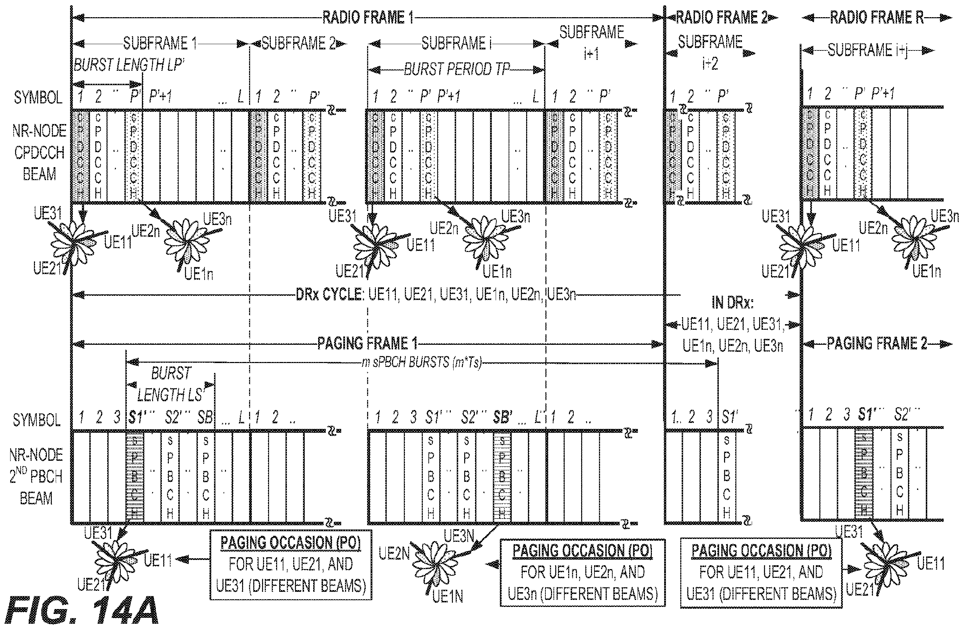

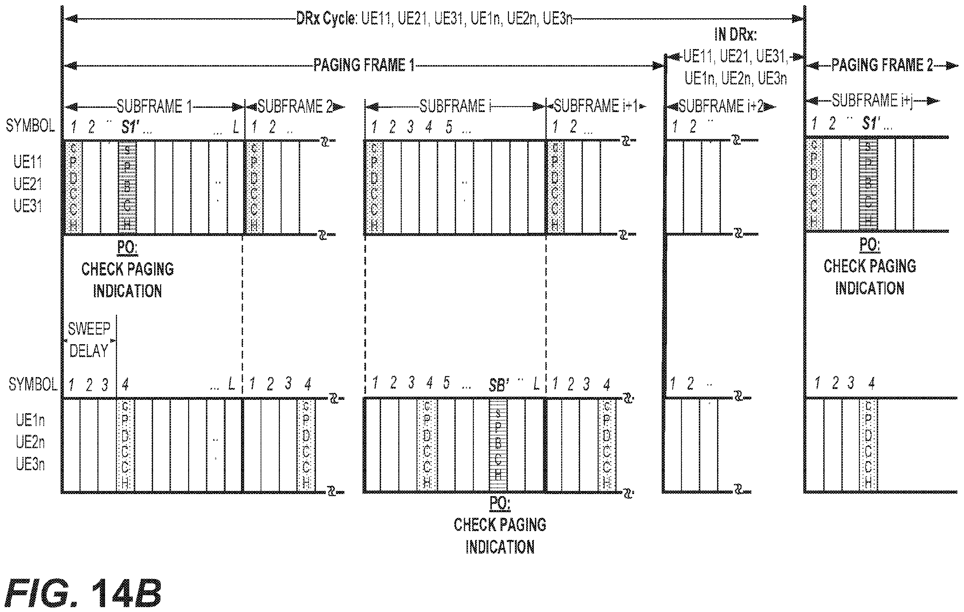

Non-scheduled physical channel and scheduled physical channel-based paging mechanisms within the beam sweeping superframe are proposed. Specifically, as shown in FIG. 14A, a paging burst may be carried on SPBCH's bursts, i.e., along with the remaining minimum SI. One Paging Frame (PF) may include one or multiple Paging Occasions (POs) per UE, but one PO per UE per PF is used in FIG. 14 for simplify the illustration. The PO may carry the Paging Indication (PI) for a UE. All UEs are assumed to have the same DRx cycle with the paging frame length the same as one radio frame length for illustration purposes, however is not limited to this.

Specifically, as shown in FIG. 14A, UE11 is a UE at sector 1 and a PO sweeping position S1' (i.e., first sweeping point), UE21 at sector 2 and a PO sweeping position S1', and UE31 at sector 3 and a PO sweeping position S1'. Likewise, UE1n is a UE at sector 1 and a PO sweeping position SB' (i.e., last sweeping point), UE2n at sector 2 and a PO sweeping position SB', and UE3n at sector 3 and a PO sweeping position SB'.

Multi-dimensional PO is exemplified in FIG. 14B with time-spatial, two dimensions. This means UE11, UE21 and UE31 have their POs at the same symbol (i.e. time) but on different beams (i.e. spatial). The POs for UE11, UE21 and UE31 may also be allocated at different PRBs in the frequency domain, i.e. time and frequency dimensions.

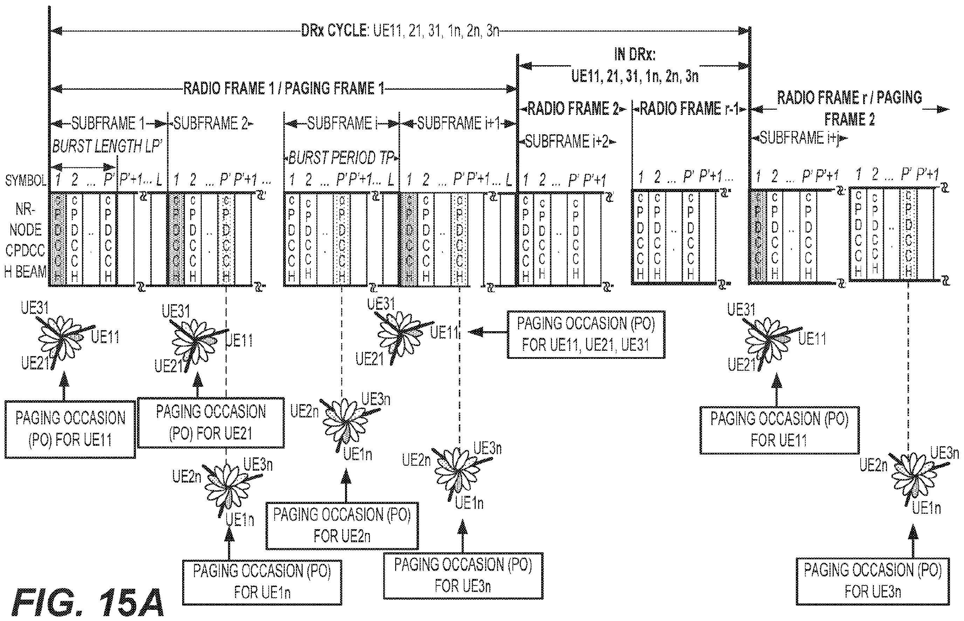

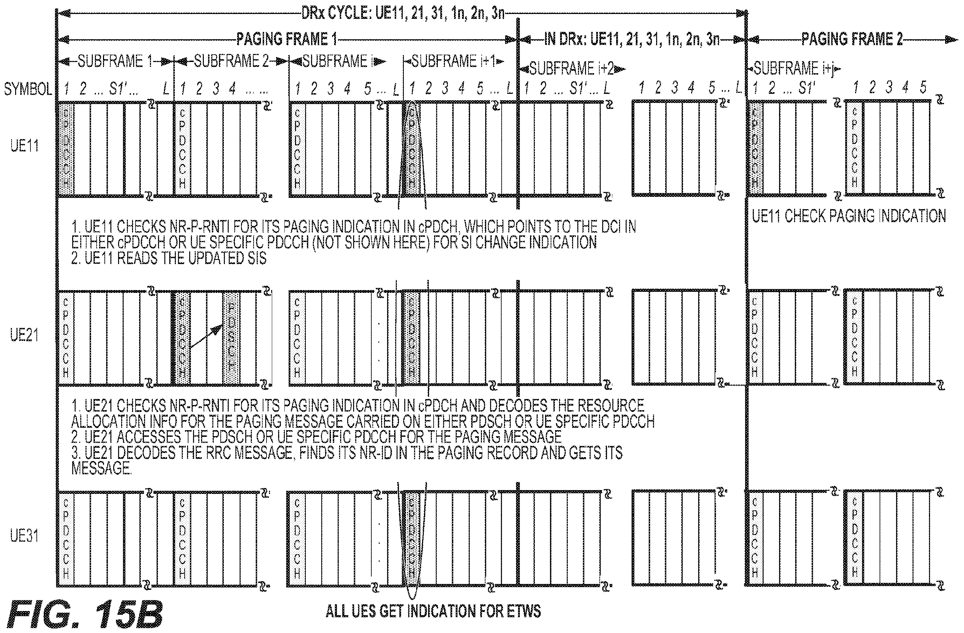

In yet another embodiment of this aspect, a paging burst may be carried on cPDCCH or gcPDCCH bursts. This is exemplarily shown in FIGs 15A and 15B. One Paging Frame (PF) may include one or multiple Paging Occasions (POs) for a particular UE. For instance, in Paging Frame 1, UE11 has a PO at symbol 1 of subframe 1, UE21 has a PO at symbol 1 of subframe 2, UE1n has a PO at symbol P' of subframe 2, UE2n has a PO at symbol P' of subframe i, and UE3n has a PO at symbol P' of subframe i+1. Also, UE11, UE21 and UE31 may have a group based PO at symbol 1 of subframe i+1. All UEs are assumed to have the same DRx cycle though the application for simplifying the illustration is not limited to this.

As shown in FIG. 15A, UEs may be paged by the beams at different paging occasions, i.e. UE11 is paged by the beam at the first symbol of Subframe 1 and UE21 is paged by the beam at the first symbol of Subframe 2. Alternatively, UEs may be paged by the beam(s) at the same paging occasion, i.e. UE11, UE21, and UE31 are paged by beams at the first symbol of Subframe i+1 for group based paging. This may be, for example, the indication of network paging message for ETWS.

In addition, FIG. 15A also shows a UE employing NR-P-RNTI (NR-Paging-Radio Network Temporary Identification) to detect its Paging Indication (PI) carried on the cPDCCH corresponding to its PO. If a PI is successfully detected, the UE may point to the DL PDSCH beam to recode the paging message as indicated by the PI DCI of cPDCCH. The beam carrying the paging message (i.e. PDSCH or UE specific PDCCH) may be the same beam or a different beam than the PI. This is illustrated by UE21 for PDSCH and UE1n for UE specific PDCCH (i.e. DCIs at the UE specific search space or carried on a UE specific PDSCH) in FIG. 15B.

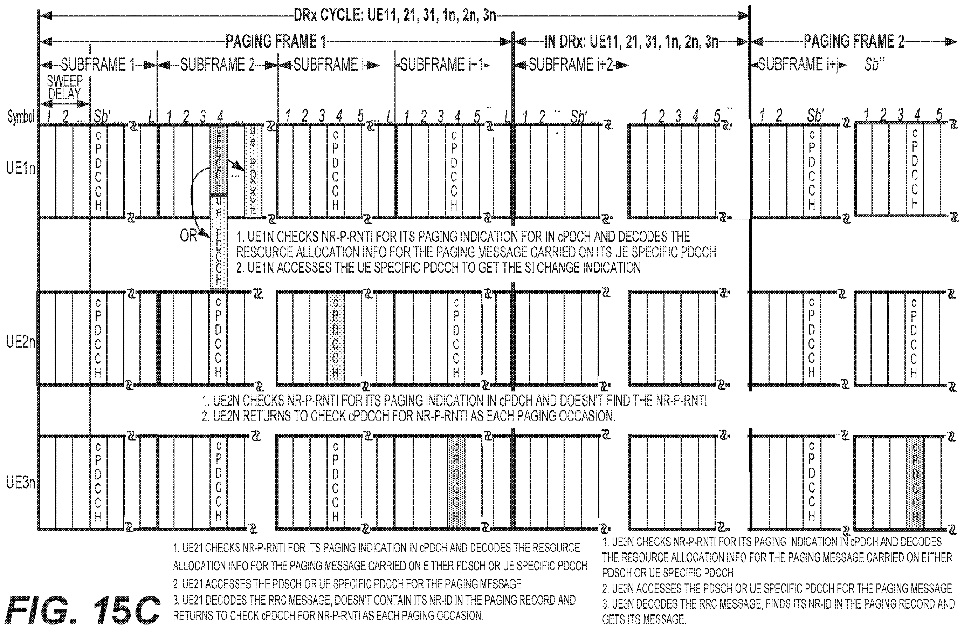

Separately, FIG. 14B illustrates a Paging Burst with Non-scheduled SPBCH. A single beam pattern, sector sweeping technique is used in the example as shown in FIGs. 14A/B and 15A/B/C, but the same scheme is also applicable to multi-beam pattern sweeping, as well as cell sweeping scenario. The SPBCH may be on contiguous or noncontiguous symbols in each burst,. The SPBCH may be swept on its own beam or on a shared beam with PSS/SSS.

While cPDCCH is exemplified in FIG. 15, the same scheme is also applicable to gcPDCCH bursts for group based paging. Also, the UEs in different sectors may have a different gcPDCCH. For example, the UEs in sector 1 may share gcPDCCH1, and UEs in sector 2 may share gcPDCCH2, and UEs in sector 3 may share gcPDCCH3. The cPDCCH and gcPDCCH may be on contiguous or noncontiguous symbols in each burst.

Network Paging Sweeping with TDD Subframes

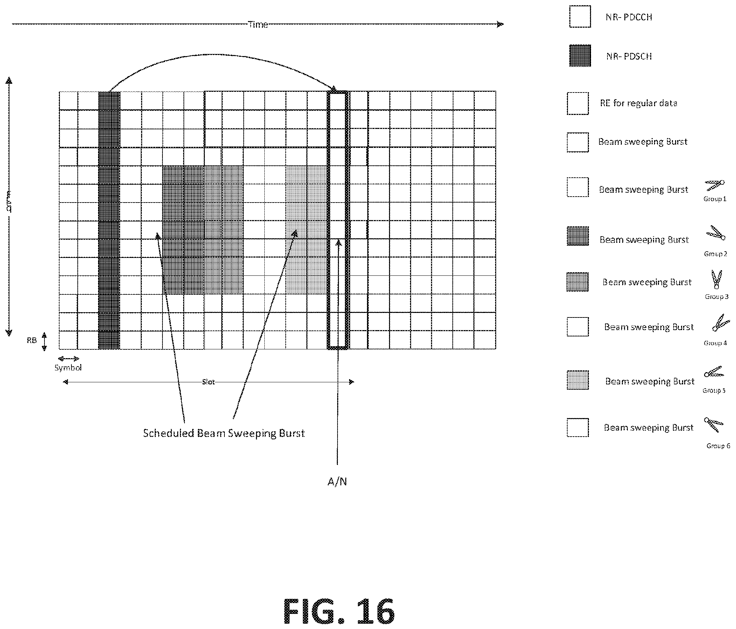

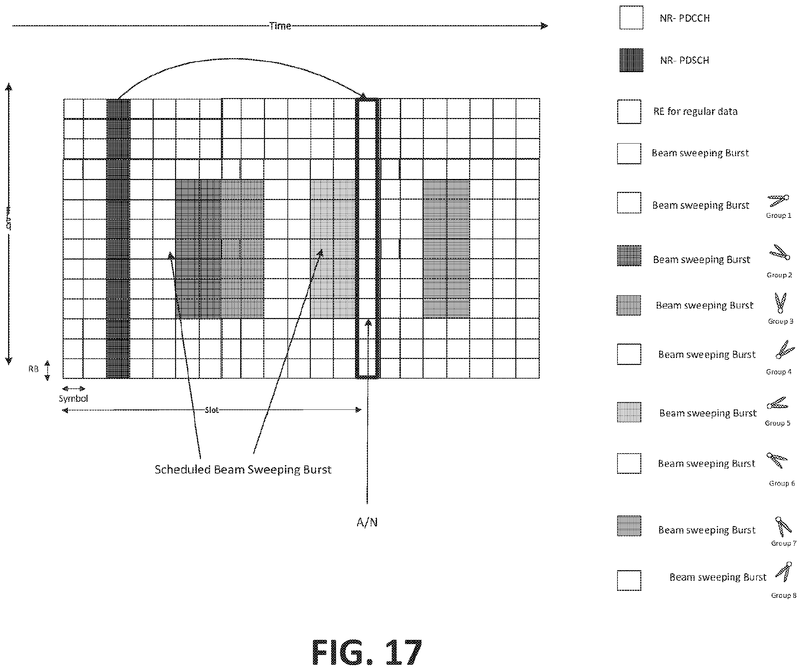

According to even a further aspect of this disclosure, beam sweeping bursts, such as a SS burst (includes idle and connected-mode), MRS or CSI-RS burst, may replace or setup continuously transmitting across slots. This is shown in FIG. 16 if there are scheduled/non-scheduled beam sweeping signals for a UE or group of UEs. If the DL A/N feedback needs to be transmitted via UL and is configured with a flexible subframe or self-contained subframe, i.e., DL/LTL may co-exist at the same slot or subframe, then the A/N feedback may collide with those scheduled/non-scheduled beam sweeping bursts when they are across multiple slots. In this case, the UE can transmit the UL A/N feedback if the gNB punctures the beam sweeping burst block or symbols. However, if the beam sweeping blocks are carrying the PO, then gNB may not be able to puncture the PO. Therefore, one aspect of this disclosure helps resolve this issue so that beam sweeping bursts won't be allocated at locations where UL symbols may be allocated in this slot/subframe. An embodiment of this concept is illustrated in FIG. 17. Although this constraint ensures there are no collisions of UL A/N transmissions and DL beam sweeping bursts, paging PI ensures complete transmission in a PO in multi-beams operation. As a result, the number of available beam sweeping symbols is reduced.

In an embodiment, a method is proposed to allocate PO in NR. The number of burst blocks for PI can be configured, using the following options: (i) RRC configuration; (ii) DCI; and (iii) MAC CE. If number of burst blocks is across multiple subframes, then PO in the PF can cross the next radio frame. The monitor paging period or paging burst set length should be smaller than the DRX cycle

According to the present disclosure, it is understood that any or all of the systems, methods and processes described herein may be embodied in the form of computer executable instructions, e.g., program code, stored on a computer-readable storage medium which instructions, when executed by a machine, such as a computer, server, M2M terminal device, M2M gateway device, transit device or the like, perform and/or implement the systems, methods and processes described herein. Specifically, any of the steps, operations or functions described above may be implemented in the form of such computer executable instructions. Computer readable storage media includes volatile and nonvolatile, removable and non-removable media implemented in any method or technology for storage of information, but such computer readable storage media do not includes signals. Computer readable storage media include, but are not limited to, RAM, ROM, EEPROM, flash memory or other memory technology, CD ROM, digital versatile disks (DVD) or other optical disk storage, magnetic cassettes, magnetic tape, magnetic disk storage or other magnetic storage devices, or any other physical medium which can be used to store the desired information and which can be accessed by a computer.

According to yet another aspect of the application, a non-transitory computer-readable or executable storage medium for storing computer-readable or executable instructions is disclosed. The medium may include one or more computer-executable instructions such as disclosed above in the plural call flows. The computer executable instructions may be stored in a memory and executed by a processor disclosed above in FIGs. 1C and 1F, and employed in devices including a node such as for example, end-user equipment. In particular, the UE as shown for example in FIGs. 1B and 1E is configured to perform the instructions of paging in a beam sweeping superframe in the new radio. The instructions may include: (i) checking, in a common physical downlink control channel in a subframe at a paging occasion, for a paging indication in a paging radio network temporary identifier; (ii) decoding, from the paging indication, resource allocation information for a paging message carried on either a physical downlink shared data channel (PDSDC) or user equipment specific physical downlink control channel (UE PDCCH); (iii) accessing the paging message carried on either the PDSCH or UE PDCCH; (iv) decoding radio resource control information in the paging message; and (v) obtaining the paging message.

While the systems and methods have been described in terms of what are presently considered to be specific aspects, the application need not be limited to the disclosed aspects. It is intended to cover various modifications and similar arrangements included within the spirit and scope of the claims, the scope of which should be accorded the broadest interpretation so as to encompass all such modifications and similar structures. The present disclosure includes any and all aspects of the following claims.

Example(s) of the present technique are defined by the following numbered clauses:

1. An apparatus comprising:

a non-transitory memory including instructions stored thereon for paging in a beam sweeping superframe, the beam sweeping superframe including a paging frame, the paging frame including a paging burst, the paging burst including symbols, and where one of the symbols relates to a paging occasion; and
a processor, operably coupled to the non-transitory memory, capable of executing instructions that cause the apparatus to:

transmit, to a first user equipment, a first paging indication carried on the paging occasion at a first beam; and
transmit, to a second user equipment, a second paging indication carried on the paging occasion at a second beam, where the second beam is different from the first beam.

2. The apparatus of clause 1, wherein the paging occasion is on a secondary physical broadcast channel, common physical downlink control channel or group common physical downlink control channel.
3. The apparatus of clause 2, wherein the secondary physical broadcast channel is present on contiguous symbols in the paging burst.
5. The apparatus of clause 1, wherein the first beam and the second beam include sectors.
6. The apparatus of clause 5, wherein each sector includes a different common physical downlink control channel.
7. The apparatus of clause 2, wherein the paging burst is carried on the secondary physical broadcast channel, and is related to a beam of a synchronization signal selected by the first or second user equipment.
8. The apparatus of clause 7, wherein the synchronization signal includes a primary synchronization signal (PSS), a secondary synchronization signal (SSS), a physical broadcast channel (PBCH), and a demodulation reference signal (DMRS) for the PBCH.
9. The apparatus of clause 8, wherein a transmission and reception point (TRP) identifier initializes the DMRS pseudo-random sequence generator for PBCH demodulation.

10. The apparatus of clause 9, wherein a block timing index of the synchronization signal is further configured to initialize the DMRS pseudo-random sequence generator for PBCH demodulation.

11. The apparatus of clause 10, wherein the DMRS pseudo-random sequence generator for demodulation indicates SS block timing.

12. An apparatus comprising:

a non-transitory memory including instructions stored thereon for paging in a beam sweeping superframe in a new radio; and

a processor, operably coupled to the non-transitory memory, capable of executing instructions that cause the apparatus to:

check, in a common physical downlink control channel in a subframe at a paging occasion, for a paging indication with a paging radio network temporary identifier;

decode, from the paging indication, resource allocation information for a paging message carried on either a physical downlink shared channel (PDSCH) or user equipment specific physical downlink control channel (UE PDCCH);

access the paging message carried on either the PDSCH or UE specific PDCCH;

decode radio resource control information in the paging message; and

obtain the paging message.

13. The apparatus of clause 12, wherein the radio resource control information includes a new radio ID in a paging record.

14. The apparatus of clause 12, wherein the processor is further configured to execute the instructions to cause the apparatus to:

determine the radio resource control information excludes a new radio ID in a paging record; and

check, at another paging occasion, for a paging radio network temporary identifier.

15. The apparatus of clause 12, wherein the paging occasion is carried on a secondary physical broadcast channel, common physical downlink control channel or group common physical downlink control channel.

16. The apparatus of clause 16, wherein the paging burst is carried on the secondary physical broadcast channel, and is related to a beam of a synchronization signal selected by the first or second user equipment.

17. The apparatus of clause 15, wherein the synchronization signal includes a primary synchronization signal (PSS), a secondary synchronization signal (SSS), a physical broadcast channel (PBCH), and a demodulation reference signal (DMRS) for the PBCH.

18. The apparatus of clause 17, wherein a transmission and reception point (TRP) identifier initializes the DMRS pseudo-random sequence generator for PBCH demodulation.

19. The apparatus of clause 18, wherein a block timing index of the synchronization signal is further configured to initialize the DMRS pseudo-random sequence generator for PBCH demodulation.

20. The apparatus of clause 19, wherein the DMRS pseudo-random sequence generator for demodulation indicates SS block timing.

**Claims**

1. A base station comprising:

a non-transitory memory including instructions stored thereon for paging; and

a processor, operably coupled to the non-transitory memory, capable of executing the instructions that cause the base station to:

transmit, to a first user equipment during a paging occasion, a first paging indication carried on a first beam; and

transmit, to a second user equipment during the paging occasion, a second paging indication carried on a second beam, where the second beam is different from the first beam,

wherein a physical broadcast channel, PBCH, and a physical downlink control channel share, PDCCH, share a spatial Quasi-CoLocation, QCL, property, and
wherein a paging burst is related to a beam of a synchronization signal selected by the first or second user equipment.

2. The base station of claim 1, wherein the first beam and the second beam include sectors.

3. The base station of claim 1, wherein the synchronization signal includes a primary synchronization signal, PSS), a secondary synchronization signal, SSS, the physical broadcast channel, and a demodulation reference signal, DMRS, for the PBCH.

4. The base station of claim 3, wherein a transmission and reception point, TRP, identifier initializes a DMRS pseudo-random sequence generator for PBCH demodulation.

5. The base station of claim 4, wherein a block timing index of the synchronization signal is further configured to initialize the DMRS pseudo-random sequence generator for PBCH demodulation.

6. The base station of claim 5, wherein the DMRS pseudo-random sequence generator for demodulation indicates SS block timing.

7. A wireless transmit/receive unit, WTRU, comprising:

a non-transitory memory including instructions stored thereon for paging; and
a processor, operably coupled to the non-transitory memory, capable of executing instructions that cause the WTRU to:

monitor a downlink control channel during a paging occasion;
detect a transmission on the downlink control channel is associated with paging information based on a paging identifier indicated in the transmission on the downlink control channel, where the detected transmission comprises an allocation including an allocation of a downlink shared channel;
determine a Quasi-CoLocation, QCL, association with a synchronization signal burst, SSB;
receive a transmission according to the allocation of the downlink shared channel; and
process the received transmission based on the determined QCL.

8. The WTRU of claim 7, wherein a radio resource control information includes a paging radio network temporary identification, RNTI.

9. The WTRU of claim 8, wherein the processor is further configured to execute the instructions to cause the WTRU to:

determine the radio resource control information excluding a paging RNTI; and
check, at another paging occasion, for the paging RNTI.

10. The WTRU of claim 7, wherein the synchronization signal includes a primary synchronization signal, PSS, a secondary synchronization signal, SSS, a physical broadcast channel, PBCH, and a demodulation reference signal, DMRS, for the PBCH.

11. The WTRU of claim 10, wherein a transmission and reception point, TRP, identifier initializes a DMRS pseudo-random sequence generator for PBCH demodulation.

12. The WTRU of claim 11, wherein a block timing index of the synchronization signal is further configured to initialize the DMRS pseudo-random sequence generator for PBCH demodulation.

13. The WTRU of claim 12, wherein the DMRS pseudo-random sequence generator for demodulation indicates SS block timing.

14. The WTRU of claim 1, wherein the first and second indications are associated with group-based paging.

15. The WTRU of claim 14, wherein the group-based paging provides an earthquake and tsunami warning system, ETWS, to the first and second UEs.

**FIG. 1A**

EP 4 250 658 A2

115/116/117

102

122

120
Transceiver

124
Speaker/
Microphone

134
Power
Source

126
Keypad

118
Processor

136
GPS Chipset

128
Display/
Touchpad/
Indicators

138
Peripherals

130
Non-
Removable
Memory

132
Removable
Memory

# FIG. 1B

**FIG. 1C**

EP 4 250 658 A2

**FIG. 1D**

FIG. 1E

**FIG. 1F**

Sector Beam Coverage at High Frequency

Sector Beam Coverage at Low Frequency

High Gain Narrow Beam

*FIG. 2*

Frame
10ms

Time

10 sub-frames

0  1  2  5  6  9

14 OFDM symbols

14 OFDM symbols

PSS          SSS          PBCH          PDCCH

*FIG. 3*

EP 4 250 658 A2

**FIG. 4**

FIG. 5A

FIG. 5A CONT.

EP 4 250 658 A2

FIG. 5B

*FIG. 6*

FIG. 7A

EP 4 250 658 A2

FIG. 7A CONT.

EP 4 250 658 A2

**FIG. 7B**

**FIG. 8A**

**FIG. 8B**

PSS  SSS  PBCH

PDCCH  UL

GUARD SYMBOL

**FIG. 9A**

TIME

FRAME 10MS

| n-1 | n | n+1 | n+2 | n+3 | ••• |

10 SUB-FRAMES

SUBFRAME 0 | SUBFRAME 1 ... SUBFRAME 9

SLOT 0 1 7 0 1 7 ••• 0 1 7

14 CP-OFDM SYMBOLS | 14 CP-OFDM SYMBOLS | 14 CP-OFDM SYMBOLS | 14 CP-OFDM SYMBOLS

0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

FREQ

SS BLOCK #0  SS BLOCK #1  SS BLOCK #2  SS BLOCK #3  SS BLOCK #4  SS BLOCK #5    SS BLOCK #6  SS BLOCK #7  SS BLOCK #8  SS BLOCK #9  SS BLOCK #10  SS BLOCK #11

SS BURST #0    SS BURST #1

(I) SS BLOCK ACROSS SLOT BOUNDARY(IES) AND 4 SYMBOLS PER SS BLOCK

0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

FREQ

SS BLOCK #0  SS BLOCK #1    SS BLOCK #2  SS BLOCK #3    SS BLOCK #4  SS BLOCK #5    SS BLOCK #6  SS BLOCK #7

SS BURST #0    SS BURST #1    SS BURST #2    SS BURST #3

(I) SS BLOCK ACROSS SLOT BOUNDARY(IES) AND 4 SYMBOLS PER SS BLOCK

TO FIG. 9A CONT.

TO FIG. 9A CONT.

EP 4 250 658 A2

39

TIME

*...* | n+8 | n+9 |

PSS  SSS  PBCH

PDCCH  UL

GUARD SYMBOL

FROM FIG. 9A

SUBFRAME 0
0 1 ... 7

SUBFRAME 9
0 1 ... 7

40

FROM FIG. 9A

14 CP-OFDM symbols | 14 CP-OFDM symbols | 14 CP-OFDM symbols | 14 CP-OFDM symbols

0 1 2 3 4 5 6 7 8 9 10 11 12 13  0 1 2 3 4 5 6 7 8 9 10 11 12 13  0 1 2 3 4 5 6 7 8 9 10 11 12 13  0 1 2 3 4 5 6 7 8 9 10 11 12 13

SS BLOCK #0  SS BLOCK #1  SS BLOCK #2  SS BLOCK #3  SS BLOCK #4  SS BLOCK #5

SS BLOCK #6  SS BLOCK #7  SS BLOCK #8  SS BLOCK #9  SS BLOCK #10  SS BLOCK #11

SS BURST #0

SS BURST #1

0 1 2 3 4 5 6 7 8 9 10 11 12 13  0 1 2 3 4 5 6 7 8 9 10 11 12 13  0 1 2 3 4 5 6 7 8 9 10 11 12 13  0 1 2 3 4 5 6 7 8 9 10 11 12 13

SS BLOCK #0  SS BLOCK #1

SS BLOCK #2  SS BLOCK #3

SS BLOCK #4  SS BLOCK #5

SS BLOCK #6  SS BLOCK #7

SS BURST #0

SS BURST #1

SS BURST #2

SS BURST #3

EP 4 250 658 A2

**FIG. 9A** CONT.

FIG. 9B

PSS  SSS  PBCH  —TIME—

PDCCH  UL

GUARD SYMBOL

FRAME 10MS

| n-1 | n | n+1 | n+2 | n+3 | ● ● ● |

TO FIG. 9B CONT.

10 SUB-FRAMES

SUBFRAME 0  SUBFRAME 1 ... SUBFRAME 9

SLOT  0  1  7  0  1  7  ● ● ●  0  1  7

14 CP-OFDM SYMBOLS  14 CP-OFDM SYMBOLS  14 CP-OFDM SYMBOLS  14 CP-OFDM SYMBOLS

0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

FREQ

SS BLOCK #0  SS BLOCK #1  SS BLOCK #2  SS BLOCK #3  SS BLOCK #4  SS BLOCK #5  SS BLOCK #6  SS BLOCK #7  SS BLOCK #8  SS BLOCK #9  SS BLOCK #10  SS BLOCK #11

SS BURST #0  SS BURST #1

(I) SS BLOCK ACROSS SLOT BOUNDARY(IES) AND 4 SYMBOLS PER SS BLOCK

0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

FREQ

SS BLOCK #0  SS BLOCK #1  SS BLOCK #2  SS BLOCK #3  SS BLOCK #4  SS BLOCK #5  SS BLOCK #6  SS BLOCK #7

SS BURST #0  SS BURST #1  SS BURST #2  SS BURST #3

(I) SS BLOCK ACROSS SLOT BOUNDARY(IES) AND 4 SYMBOLS PER SS BLOCK

TO FIG. 9B CONT.

EP 4 250 658 A2

41

FIG. 9B CONT.

**FIG. 10**

SS BLOCK IS NOT ACROSS SLOT BOUNDARY(IES) AND 4 SYMBOLS PER SS BLOCK

EP 4 250 658 A2

FIG. 10 CONT.

FIG. 11A

FIG. 11A CONT.

FIG. 11B

FIG. 11B CONT.

FIG. 12

FIG. 12 CONT.

10 ms             10 ms             10 ms             10 ms

←—SS BURST SET PERIODICITY—→|←—SS BURST SET PERIODICITY—→|←—SS BURST SET PERIODICITY—→|←—SS BURST SET PERIODICITY—→

|←————————PBCH BURST SET PERIODICITY————————→|←————————PBCH BURST SET PERIODICITY————————→|

| $n$ | $n+1$ | $n+2$ | $n+3$ |
|---|---|---|---|

SS BURST + PBCH BURST COEXIST IN RF $n$     SS BURST IN RF $n+1$     SS BURST + PBCH BURST COEXIST IN RF $n+2$     SS BURST IN RF $n+3$

SS TIMING INDEX

←————————————————

RADIO FRAME BOUNDARY     DETECTED SS BLOCK     ASSOCIATED TSS/ DMRS

*FIG. 13A*

EP 4 250 658 A2

EP 4 250 658 A2

*FIG. 13B*

52

*FIG. 13B* CONT.

FIG. 14A

EP 4 250 658 A2

*FIG. 14B*

EP 4 250 658 A2

FIG. 15A

1. UE11 CHECKS NR-P-RNTI FOR ITS PAGING INDICATION IN cPDCH, WHICH POINTS TO THE DCI IN EITHER cPDCCH OR UE SPECIFIC PDCCH (NOT SHOWN HERE) FOR SI CHANGE INDICATION
2. UE11 READS THE UPDATED SIS

1. UE21 CHECKS NR-P-RNTI FOR ITS PAGING INDICATION IN cPDCH AND DECODES THE RESOURCE ALLOCATION INFO FOR THE PAGING MESSAGE CARRIED ON EITHER PDSCH OR UE SPECIFIC PDCCH
2. UE21 ACCESSES THE PDSCH OR UE SPECIFIC PDCCH FOR THE PAGING MESSAGE
3. UE21 DECODES THE RRC MESSAGE, FINDS ITS NR-ID IN THE PAGING RECORD AND GETS ITS MESSAGE.

UE11 CHECK PAGING INDICATION

ALL UES GET INDICATION FOR ETWS

*FIG. 15B*

**FIG. 15C**

FIG. 16

**FIG. 17**

**FIG. 18**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62475744